# EUROPEAN PATENT APPLICATION

(11) **EP 3 757 848 A1**
(43) Date of publication of application: **30.12.2020**
(21) Application number: 20163512.5
(22) Date of filing: 17.03.2020
(51) Int. Cl.: G06F 21/74, G06F 21/60, G06F 21/72, H04L 9/08

(54) **CONVERGED CRYPTOGRAPHIC ENGINE**

(30) Priority: 28.06.2019 US 201916457909
(71) Applicant: INTEL Corporation, Santa Clara, CA 95054 (US)
(72) Inventor: Chhabra, Siddhartha, Portland, OR Oregon 97229 (US); Dewan, Prashant, Portland, OR Oregon 97229 (US)
(74) Representative: Goddar, Heinz J.

(57) **Abstract**

An apparatus of a computing system, a computer-readable medium, a method and a system. The apparatus comprises one or more processors that are to communicate with a computing engine of the computing system and to: receive an instruction including information on a cryptographic key; determine whether a no-decrypt mode is to be active or inactive with respect to a read request from the computing engine; when receiving the read request to read content from a memory, and in response to a determination that the no-decrypt mode is inactive, decrypt the content using the key to generate a decrypted content and send the decrypted content to the computing engine; and in response to receiving the read request, and in response to a determination that the no-decrypt mode is active, send the content to the computing engine without decrypting the content.

## Description

### TECHNICAL FIELD

Embodiments described herein generally relate to information systems and computing architecture and, more particularly, to a system architecture for the protected communication of content, such as graphics-related content.

### BACKGROUND

Cloud-computing and software-as-a-service (SAAS) providers operate increasingly complex computer servers and server farms, where information security remains a top concern. Recent advances in security include cryptographic isolation between customer workloads, typically implemented as distinct virtual machines (VMs) running on a common platform.

One security approach involves the use of a cryptographic engine, such as, for example, a multi-key total memory encryption (MKTME) where a hypervisor may assign a cryptographic key to each of the customer workloads running in its own VM. Each workload may use its key to protect information that it stores in the server's physical memory. A secure MKTME may be used as part of the memory-access subsystem to perform encryption and decryption operations as part of providing secured memory access. A MKTME may be integrated into a computing system architecture to enable framebuffer protection for graphics-related content. Such architectures involve the use of separate encryption and/or decryption engines in a graphics engine and a connected display engine of the computing system to enable encryption of the graphics-related content, once at the graphics engine using a first cryptographic key, for example under a PAVP mechanism, and then again at the display engine, using a second cryptographic key, for example under a High Bandwidth Digital Content Protection (HDCP) mechanism.

Although computing system architectures making use of cryptographic engines such as MKTMEs to process secured graphics-related content allow separate workloads to be subjected to dedicated cryptography algorithms, such architectures still suffer from performance issues as a result of a need for secure graphics-related content at both the graphics engine and the display engine.

### BRIEF DESCRIPTION OF THE DRAWINGS

To provide a more complete understanding of the present disclosure and features and advantages thereof, reference is made to the following description, taken in conjunction with the accompanying figures, where like reference numerals represent like parts, in which:
Fig. 1 is a schematic diagram illustrating an example computing environment including edge devices and cloud services, in which cryptographic memory protection may be implemented according to various embodiments;
Fig. 2 is a high-level block diagram illustrating a host machine platform, which may implement all, or portions of, edge devices or cloud services of Fig. 1 according to various embodiments;
Fig. 3 is a diagram illustrating an example computing hardware and software architecture of a computing system such as the one depicted in Fig. 2, in which various interfaces between hardware components and software components are shown;
Fig. 4 is a high-level block diagram illustrating a prior art computing system architecture;
Fig. 5 is a schematic representation of an address layout message according to an embodiment;
Fig. 6 is a high-level block diagram illustrating a prior art computing system architecture using a Protected Audio and Video Path (PAVP) for encryption;
Fig. 7a is a high-level block diagram illustrating a computing system architecture according to an embodiment;
Fig. 7b is a high-level block diagram showing signal exchanges between various components of the computing system architecture of Fig. 5a according to some embodiments;
Fig. 8 is a high-level block diagram illustrating a process according to one embodiment using PAVP for encryption;
Fig. 9 is a high-level block diagram illustrating a prior art computing system architecture using a High Bandwidth Digital Content Protection mechanism (HDCP) for encryption;
Fig. 10 is a is a high-level block diagram illustrating a computing system architecture using a HDCP for encryption according to one embodiment;
Fig. 11 is a flowchart showing an example process according to one embodiment; and
Fig. 12 is a flowchart showing another example process according to another embodiment.

### DETAILED DESCRIPTION OF EMBODIMENTS

Aspects of the instant disclosure are directed to cryptographic memory protection. The described embodiments may be used to provide memory encryption protection for content, such as graphics-related content using a converged cryptographic engine, simplifying the computing system design architecture, cutting costs, and improving performance. In embodiments, memory encryption may be provided by way of a converged cryptographic engine that obviates a need for separate cryptographic engines in either the graphics engine, such as a graphics processing unit (GPU), or in the display engine. Although portions of the instant description refer to "graphics-related content," it is to be understood that principles of embodiments related to the use of a converged cryptographic engine may be applied to any type of content, including content that is not graphics-related, for example using multiple engines that do not necessarily involve a graphics engine, display engine and display.

Aspects of the described embodiments provide a cryptographic engine, such as a MKTME, that includes an input/output interface and one or more processors, where the one or more processors receive an instruction including information on a cryptographic key, such as either from the software in the core or cores of a central processing unit (CPU), determine whether a no-decrypt mode is to be active or inactive with respect to a read request from the computing engine, such as a graphics engine; in response to receiving the read request from the computing engine to read content from a memory of the computing system, such as a system memory, and in response to a determination that the no-decrypt mode is inactive, decrypt the content using the key to generate a decrypted content, and send the decrypted content to the computing engine; and in response to receiving the read request from the computing engine of the computing system to read the content from a memory of the computing system, and in response to a determination that the no-decrypt mode is active, send the content to the computing engine without decrypting the content.

The above features according to some embodiments allow a converged or centralized cryptographic engine to address the multiple encryption/decryption needs of a graphics processing system including for example a GPU, while advantageously doing away with the need for a cryptographic engine in the GPU (for example to encrypt or decrypt using PAVP), or in the display engine (for example to encrypt or decrypt using HDCP).

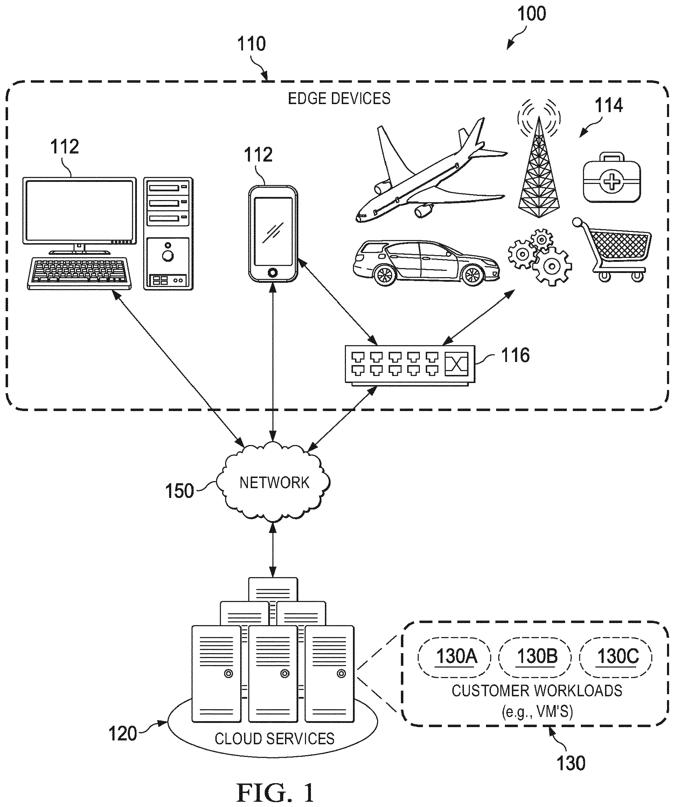

Figs. 1-3 are provided below to describe the general architecture of a computing system that could perform functions of embodiments described herein.

Fig. 1 is a schematic diagram illustrating an example computing system 100. In various embodiments, system 100 or its underlying components may include the cryptographic memory protection functionality described throughout this disclosure. For example, a cloud service provider 120 may host workloads 130 (e.g., virtual machines) for multiple customers or third parties. Accordingly, in an example, a cloud service provider 120 may implement multi-key cryptographic memory protection to provide memory encryption on a per-tenant basis, thus ensuring that each customer workload 130 is separately protected and isolated using a unique encryption key. Cryptographic memory protection may also be implemented by other components of system 100, such as edge devices 110.

Edge devices 110 may include any equipment or devices deployed or connected near the "edge" of a communication system 100. In the illustrated embodiment, edge devices 110 include end-user devices 112 (e.g., desktops, laptops, mobile devices), Internet-of-Things (loT) devices 114, and networking devices 116 such as gateways or routers, among other examples. Edge devices 110 may communicate with each other or with other remote networks and services (e.g., cloud services 120) through one or more networks or communication protocols, such as communication network 150. Moreover, in an example, certain edge devices 110 may include the cryptographic memory protection functionality described throughout this disclosure.

End-user devices 112 may include any device that enables or facilitates user interaction with computing system 100, including, for example, desktop computers, laptops, tablets, mobile phones and other mobile devices, and wearable devices (e.g., smart watches, smart glasses, headsets), among other examples.

loT devices 114 may include any device capable of communicating or participating in an Internet-of-Things (loT) system or network. IoT systems may refer to new or improved ad-hoc systems and networks composed of multiple different devices (e.g., loT devices 114) interoperating and synergizing for a particular application or use case. Such ad-hoc systems are emerging as more and more products and equipment evolve to become "smart," meaning they are controlled or monitored by computer processors and are capable of communicating with other devices. For example, an loT device 114 may include a computer processor or communication interface to allow interoperation with other components of system 100, such as with cloud services 120 or other edge devices 110. loT devices 114 may be "greenfield" devices that are developed with loT capabilities from the ground-up, or "brownfield" devices that are created by integrating loT capabilities into existing legacy devices that were initially developed without loT capabilities. For example, in some cases, loT devices 114 may be built from sensors and communication modules integrated in or attached to "things," such as equipment, toys, tools, vehicles, living things (e.g., plants, animals, humans), and so forth. Alternatively, or additionally, certain loT devices 114 may rely on intermediary components, such as edge gateways or routers 116, to communicate with the various components of system 100.

Cloud services 120 may include services that are hosted remotely over a network 150, or in the "cloud." In an example, cloud services 120 may be remotely hosted on servers in datacenter (e.g., application servers or database servers). Cloud services 120 may include any services that may be utilized by or for edge devices 110, including but not limited to, data and application hosting, computational services (e.g., data analytics, searching, diagnostics and fault management), security services (e.g., surveillance, alarms, user authentication), mapping and navigation, geolocation services, network or infrastructure management, loT application and management services, payment processing, audio and video streaming, messaging, social networking, news, and weather, among other examples. Moreover, in an example, certain cloud services 120 may include the cryptographic memory protection functionality described throughout this disclosure. For example, a cloud service provider 120 often hosts workloads 130 (e.g., data or applications) for multiple customers or third parties. Accordingly, in an example, a cloud service provider 120 may implement multi-key cryptographic memory protection to provide memory encryption on a per-tenant basis, thus ensuring that each customer workload 130 is separately protected and isolated using a unique encryption key.

Network 150 may be used to facilitate communication between the components of computing system 100. For example, edge devices 110, such as end-user devices 112 and loT devices 114, may use network 150 to communicate with each other or access one or more remote cloud services 120. Network 150 may include any number or type of communication networks, including, for example, local area networks, wide area networks, public networks, the Internet, cellular networks, Wi-Fi networks, millimeter-Wave networks, short-range networks (e.g., Bluetooth or ZigBee), or any other wired or wireless networks or communication mediums.

The example embodiments described herein may include, or may operate on, logic or a number of components, modules, circuits, or engines, which for the sake of consistency are termed engines, although it will be understood that these terms may be used interchangeably. Engines may be hardware, configured by software or firmware, and communicatively coupled to one or more electronic circuits in order to carry out the operations described herein. Engines include hardware and, as such, engines are tangible entities capable of performing specified operations and may be configured or arranged in any suitable manner. In an example, electronic circuitry may be arranged (e.g., internally or with respect to external entities such as other circuits) in a specified manner as an engine. In an example, the whole or part of one or more computing systems (e.g., a standalone, client or server computing system) or one or more hardware processors may be configured by firmware or software (e.g., instructions, an application portion, or an application) as an engine that operates to perform specified operations. In an example, the software may reside on a machine-readable medium (for instance, a non-transitory storage medium, such as a hardware storage device). In an example, the software, when executed by the underlying hardware of the engine, causes the hardware to perform the specified operations.

Accordingly, the term engine is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which engines are temporarily configured, each of the engines need not be instantiated at any one moment in time. For example, where the engines comprise a general-purpose hardware processor configured using software, the general-purpose hardware processor may be configured as respective different engines at different times. Software may accordingly configure a hardware processor, for example, to constitute a particular engine at one instance of time and to constitute a different engine at a different instance of time.

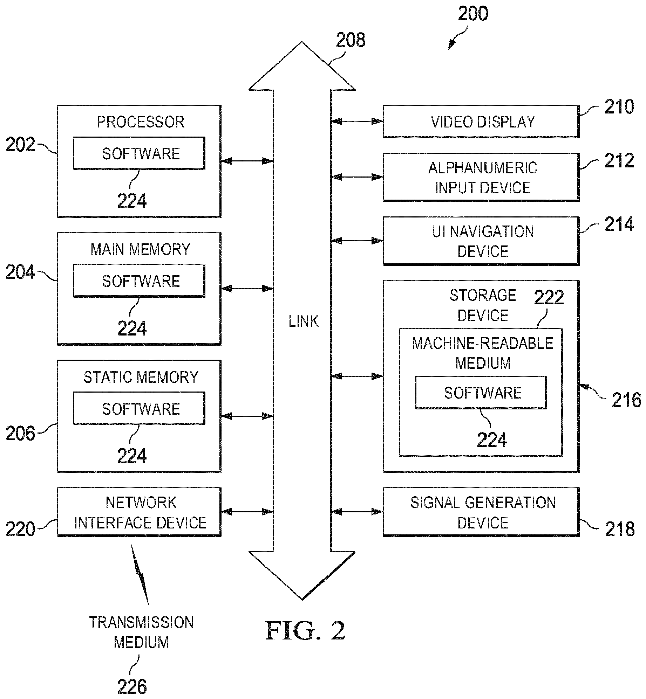

Fig. 2 is a high-level block diagram illustrating a host machine platform, which may implement all, or portions of, edge devices 110 or cloud services 120 of Fig. 1 according to various embodiments. In certain embodiments, programming of the computing system 200 according to one or more particular algorithms produces a special-purpose machine upon execution of that programming. In a networked deployment, the host machine may operate in the capacity of either a server or a client machine in server-client network environments, or it may act as a peer machine in peer-to-peer (or distributed) network environments. The host machine may take any suitable form factor, such as a personal computer (PC) workstation, a server, whether rack-mounted, or stand-alone, a mainframe computer, a cluster computing system, or the like, a set-top box, as well as a mobile or portable computing system, such as a laptop/notebook PC, an onboard vehicle system, wearable device, a tablet PC, a hybrid tablet, a personal digital assistant (PDA), a mobile telephone or, more generally, any machine capable of executing instructions (sequential or otherwise) that specify actions to be taken by that machine.

Example host machine 200 includes at least one processor 202 including a central processing unit (CPU), a graphics processing unit (GPU), processor cores, compute nodes, etc., a main memory 204 and a static memory 206, which communicate with each other via a link 208 (e.g., bus). The host machine 200 may further include a video display unit 210, an alphanumeric input device 212 (e.g., a keyboard), and a user interface (Ul) navigation device 214 (e.g., a mouse). In one embodiment, the video display unit 210, input device 212 and UI navigation device 214 are incorporated into a touch screen display. The host machine 200 may additionally include a storage device 216 (e.g., a drive unit), a signal generation device 218 (e.g., a speaker), a network interface device (NID) 220, and one or more sensors (not shown), such as a global positioning system (GPS) sensor, compass, accelerometer, or other sensor.

The storage device 216 includes a machine-readable medium 222 on which is stored one or more sets of data structures and instructions 224 (e.g., software) embodying or utilized by any one or more of the methodologies or functions described herein. The instructions 224 may also reside, completely or at least partially, within the main memory 204, static memory 206, or within the processor 202 during execution thereof by the host machine 200, with the main memory 204, static memory 206, and the processor 202 also constituting machine-readable media.

While the machine-readable medium 222 is illustrated in an example embodiment to be a single medium, the term "machine-readable medium" may include a single medium or multiple media (e.g., a centralized or distributed database, or associated caches and servers) that store the one or more instructions 224. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks.

NID 220 according to various embodiments may take any suitable form factor. In one such embodiment, NID 220 is in the form of a network interface card (NIC) that interfaces with processor 202 via link 208. In one example, link 208 includes a PCI Express (PCIe) interconnect, including a slot into which the NIC form-factor may removably engage. In another embodiment, NID 220 is a network interface circuit laid out on a motherboard together with local link circuitry, processor interface circuitry, other input/output circuitry, memory circuitry, storage device and peripheral controller circuitry, and the like. In another embodiment, NID 220 is a peripheral that interfaces with link 208 via a peripheral input/output port such as a universal serial bus (USB) port. NID 220 transmits and receives data over transmission medium 226, which may be wired or wireless (e.g., radio frequency, infra-red or visible light spectra, etc.), fiber optics, or the like.

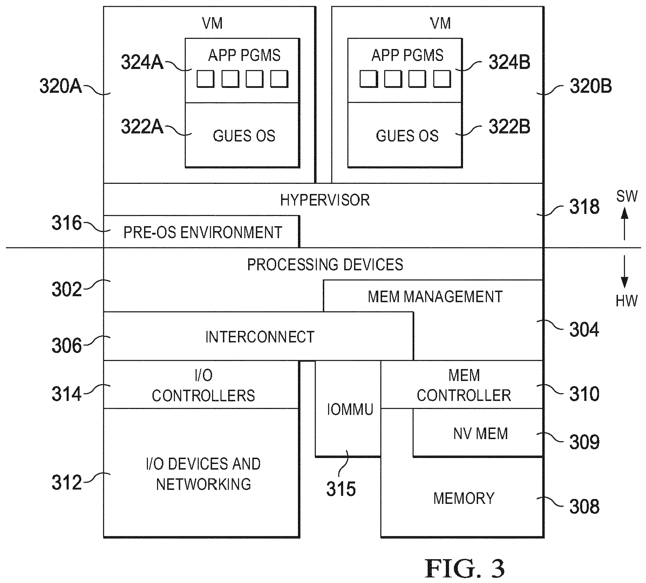

Fig. 3 is a diagram illustrating an example computing hardware and software architecture of a computing system such as the one depicted in Fig. 2, in which various interfaces between hardware components and software components are shown. As indicated by the "HW" label, hardware components are represented below the divider line, whereas software components denoted by the "SW" label reside above the divider line. On the hardware side, processing devices 302 (which may include one or more microprocessors, digital signal processors, etc.), each having one or more processor cores, are interfaced with memory management device 304 and system interconnect 306. Memory management device 304 provides mappings between virtual memory used by processes being executed, and the physical memory. Memory management device 304 may be an integral part of a central processing unit (CPU) which also includes the processing devices 302.

Interconnect 306 includes a backplane such as memory, data, and control lines, as well as the interface with input/output devices, e.g., PCI-e, USB, etc. Memory 308 (e.g., dynamic random access memory--DRAM) and non-volatile memory 309 such as flash memory (e.g., electrically-erasable read-only memory--EEPROM, NAND Flash, NOR Flash, etc.) are interfaced with memory management device 304 and interconnect 306 via memory controller 310. I/O devices, including video and audio adapters, non-volatile storage, external peripheral links such as USB, personal-area networking (e.g., Bluetooth), etc., camera/microphone data capture devices, fingerprint readers and other biometric sensors, as well as network interface devices such as those communicating via Wi-Fi or LTE-family interfaces, are collectively represented as I/O devices and networking 312, which interface with interconnect 306 via corresponding I/O controllers 314.

In a related embodiment, input/output memory management unit IOMMU 315 supports secure direct memory access (DMA) by peripherals. IOMMU 315 may provide memory protection by meditating access to memory 308 from I/O device 312. IOMMU 315 may also provide DMA memory protection in virtualized environments, where it allows certain computing hardware resources to be assigned to certain guest VMs running on the system, and enforces isolation between other VMs and peripherals not assigned to them.

On the software side, a pre-operating system (pre-OS) environment 316, which is executed at initial system start-up and is responsible for initiating the boot-up of the operating system. One traditional example of pre-OS environment 316 is a system basic input/output system (BIOS). In present-day systems, a unified extensible firmware interface (UEFI) is implemented. Pre-OS environment 316 is responsible for initiating the launching of the operating system or virtual machine manager, but also provides an execution environment for embedded applications.

Hypervisor 318 is system software that creates and controls the execution of virtual machines (VMs) 320A and 320B. Hypervisor 318 may run directly on the hardware HW, as depicted, or hypervisor 318 may run under the control of an operating system as a hosted hypervisor. Each VM 320A, 320B includes a guest operating system 322A, 322B, and application programs 324A, 324B.

Each guest operating system (OS) 322A, 322B provides a kernel that operates via the resources provided by hypervisor 318 to control the hardware devices, manage memory access for programs in memory, coordinate tasks and facilitate multi-tasking, organize data to be stored, assign memory space and other resources, load program binary code into memory, initiate execution of the corresponding application program which then interacts with the user and with hardware devices, and detect and respond to various defined interrupts. Also, each guest OS 322A, 322B provides device drivers, and a variety of common services such as those that facilitate interfacing with peripherals and networking, that provide abstraction for corresponding application programs 324A, 324B so that the applications do not need to be responsible for handling the details of such common operations. Each guest OS 322A, 322B additionally may provide a graphical user interface (GUI) that facilitates interaction with the user via peripheral devices such as a monitor, keyboard, mouse, microphone, video camera, touchscreen, and the like. In an example, guest OS 322B may omit a GUI.

Each guest OS 322A, 322B may provide a runtime system that implements portions of an execution model, including such operations as putting parameters onto the stack before a function call, the behavior of disk input/output (I/O), and parallel execution-related behaviors.

In addition, each guest OS 322A, 322B may provide libraries that include collections of program functions that provide further abstraction for application programs. These include shared libraries, dynamic linked libraries (DLLs), for example.

Application programs 324A, 324B are those programs that perform useful tasks for users, beyond the tasks performed by lower-level system programs that coordinate the basis operability of the computing system itself.

With growing security needs, memory cryptographic engines have become a requirement for different usages to protect code and data resident in the main memory or system memory of computing system architectures. However, there are typically multiple cryptographic engines instantiated at various locations throughout the platform resulting in power and area overheads and adding design complexity. For example, the central processing unit (CPU) and graphics engines (such as graphics processing units (GPUs) or media engines) despite being on the same interconnect as one another, and most commonly coordinating to accomplish a task (e.g., application running on the CPU offloading work to the GPU) may implement multiple cryptographic engines for different purposes. As also noted above, the display engine and graphics engine may further each use their own cryptographic engines for encryption and decryption of graphics-related content.

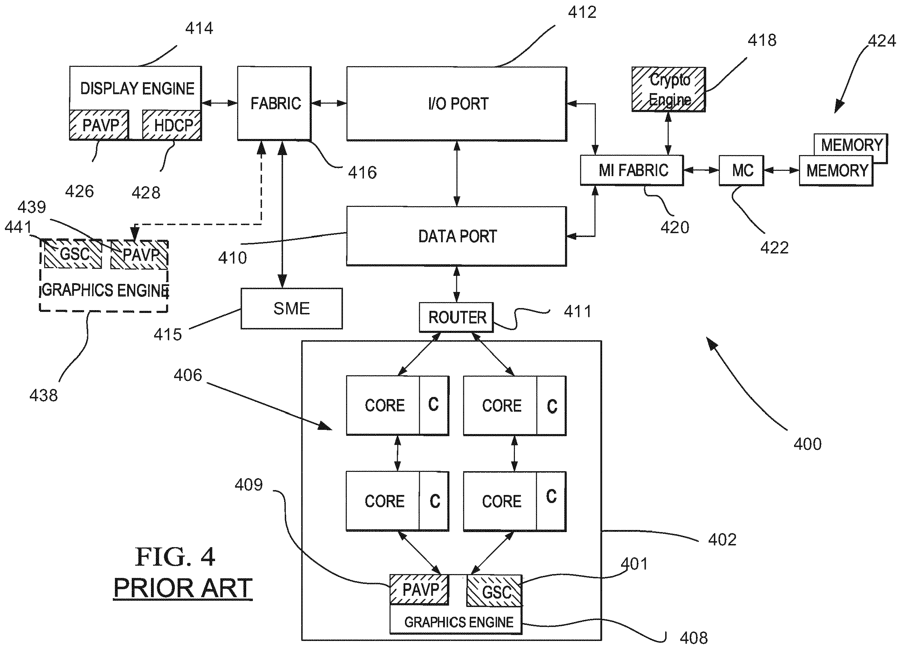

An example of a prior art computing system architecture using multiple cryptographic engines is shown in Fig. 4. According to Fig. 4, the architecture 400 includes a CPU 402, which in turn includes a series of cores and caches "C" 406 and a graphics engine 408 comprising therein a cryptographic engine in the form of PAVP engine 409. The CPU 204 is connected to the rest of the architecture by way of router 411 and through data ports 410 and 412. Input/Output (I/O) port 412 is connected by way of fabric 416 to a display engine 414, which includes its own cryptographic engines in the form of PAVP engine 426 and HDCP engine 428. The CPU 402 is further connected via router 411, data port 410 and i/o port 412 and through memory interface (MI) fabric 420 to a system memory 424 by way of a memory controller (MC) 422. A cryptographic engine such as a multi-key total memory encryption (MKTME) 418 is coupled to the MI fabric 420 to among other things encrypt or decrypt content to be written into or read from system memory 424. As further seen in Fig. 4, the graphics engine itself can be integrated into the CPU (as shown by way of example by graphics engine 408), or discrete (as shown by way of example by graphics engine 438) and attached to the rest of the computing system using an interconnect such as a Peripheral Component Interconnect Express (PCIe) compliant interconnect. The security controller forming the root of trust for usages such as Digital Rights Management (DRM) can either be integrated on the graphics engine itself (as seen by way of Graphics Security controller (GSC) 401 or 441 or it can be present as a separate hardware unit outside of the graphics engine, e.g., Converged Security and Management Engine (CSME) 415 on current platforms.

As seen in the example of Fig. 4, there are no less than four cryptographic engines for the secure processing of graphics-related content, including the PAVP engine 409 for the graphics engine 408, the MKTME 418, the PAVP engine 426 and HDCP engine 428 for the display engine 414. The MKTME 418 is used for providing isolation is memory by allowing software to associate different keys with different memory pages. The PAVP engine 409 shown in the graphics engine is used by the graphics subsystem to create encrypted content to be displayed by the display engine. The display engine in turn implements two more crypto engines, PAVP engine 426 to decrypt PAVP encrypted content read from system memory 424, and HDCP engine 428 for HDCP encryption to protect the link to a display device connected to the display engine 414.

### Multi-key Total Memory Encryption (MKTME) engine

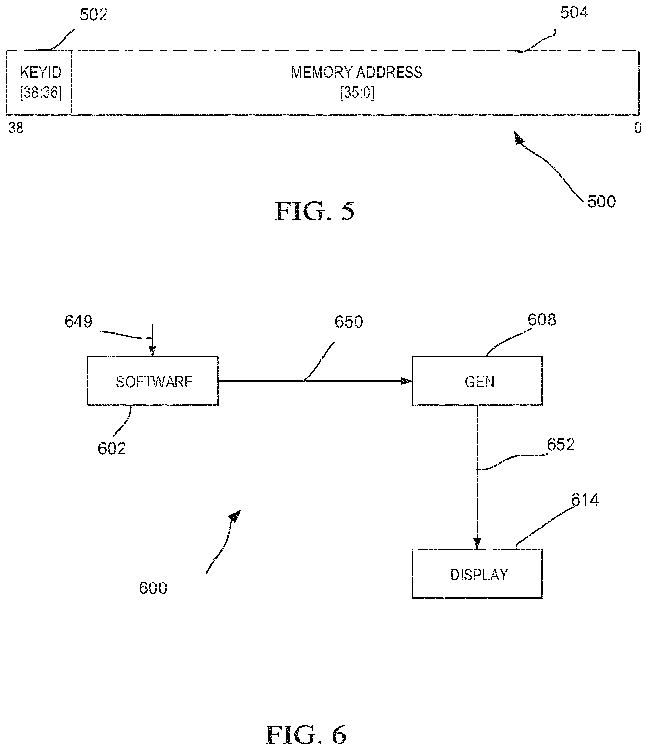

MKTMEs, such as, for example, the one shown in the prior art example of Fig. 4, in general enable cloud software to cryptographically isolate customer workloads (e.g., virtual machines (VMs)) in memory by encrypting each VM's memory with a separate key. The MKTMEs provide the capability to assign keys on a per-page basis. The key to be used for encrypting/decrypting a particular memory access is obtained from the physical address where most significant bits represent a key identifier (Key ID). The Key ID is used to lookup the key to use in the MKTME to encrypt/decrypt a memory access. The key associated with the Key ID is typically programmed by the VMM. With MKTME, the physical address is laid out as shown in Fig. 6.

Fig. 5 shows an example address layout 500 where the physical address includes 39 bits and the upper 3 bits are used as Key ID 502. The most significant bits 504 are used to identify the key to use to protect the data. Different implementations may have different (for example, more or less) physical address bits and Key ID bits. The number of keys is typically configurable and depends on application needs.

### PAVP Encryption engine in Gen and Decryption engine in Display

Reference is now made to Fig. 6, which illustrates a high-level block diagram of a components of a computing system architecture such as the architecture of Fig. 4. Fig. 6 shows signal exchanges based on a known PAVP encryption mechanism according to embodiments. Here, like components as compared with those of Fig. 4 are referred to with like reference numerals. Thus, in Fig. 6, a portion 600 of the computing system architecture 400 of Fig. 4 is shown, with the software 602 corresponding to the software in CPU 402 of Fig. 4, and the graphics engine 608 and display engine 614 corresponding to graphics engine 408 and display engine 414 of Fig. 4, respectively. As shown in Fig. 6, by way of signal 650, graphics-related content 649 compressed and encrypted by the content provider is first sent by the software stack 602 in the CPU to the graphics engine 608. The graphics engine 608 then proceed to decrypt the content, decode it and re-encrypt the decoded frames with a key shared between itself and the display engine 614. Graphics engine 608 then sends the thus encrypted content to the display engine 614 by way of signal 652. The PAVP encryption engine in the graphics engine 608 (see PAVP engines 409 or 439 of Fig. 4) and the PAVP encryption engine in display engine 614 (see PAVP engine 426 of Fig. 4) are used to encrypt the frame at the graphics engine 608 and decrypt it in the display engine 614, respectively.

### HDCP Encryption engine in Display Engine

HDCP is a link protection protocol to protect display data/graphics-related content as it is transmitted over the link. Referring back now to Fig. 4 and still to Fig. 6, CSME 415 of Fig. 4 is responsible for programming the HDCP key into the display engine 614 to use for encrypting the frames/content before the graphics-related content is sent by the display engine 614 to a display device not shown in Fig. 6. The display engine 614 implements a cryptographic engine supporting the HDCP cipher (counter mode encryption), and, after having decrypted the PAVP encrypted content sent to it by the graphics engine 608 by way of signal 652, proceeds to encrypt the content using the HDCP key before sending this HDCP encrypted content to a display device for display over a secure link.

As demonstrated by way of example above with respect to the description relating to Figs. 4-6, the proliferation of multiple cryptographic engines could be seen in many computing systems where various components, such as GPUs or display engines, have in-built cryptographic engines and limited ability of cross-component sharing of these engines. Prior art solutions, such as the one shown by way of example in Figs. 4-6, by replicating cryptographic engines across various engines, increase the area and power overheads of the platform. Additionally, since dedicated cryptographic engines are typically delivered by different design teams, the overall design cost and integration complexity of realizing a computing system that integrates these dedicated cryptographic engines is increased. Additionally, some of the cryptographic engines of the prior art can provide less than ideal level of security needed for new usages. As an example, the cryptographic engine in a typical prior art display engine implements the Advanced Encryption Standard (AES) Electronic Codebook (ECB), or AES-ECB protocol to encrypt and/or decrypt content, which protocol can reveal image content and break confidentiality.

Some demonstrative embodiments propose a mechanism of using a converged cryptographic engine to be shared by multiple computing system components. This converged cryptographic engine may be located on a memory interface of a computing system architecture, and may comprise a MKTME. Embodiments involve relatively straightforward hardware changes to the display and graphics hardware, and introduce a new Encrypt-but-no-Decrypt (ND) mode of the converged cryptographic engine to allow the convergence. With the proposed embodiments, the platform area/power overheads as well as production and implementation costs are reduced by reducing the number of cryptographic engines within a given computing system, and the security of some usages are improved while keeping the security of other usages unchanged.

Embodiments propose collapsing all the cryptographic engines to a single (converged) engine, such as one on the memory interface, for example a converged MKTME. Embodiments propose a new mode of a cryptographic engine, such as a MKTME, an encrypt-but-no-decrypt (ND) mode, where data or content written to memory gets encrypted but a read of the data may or may not get decrypted based on the mode at which the converged cryptographic engine is set. The ND mode may for example be used to replace the HDCP cipher implemented in the display engine, that is, the HDCP mechanism by which the display engine would have encrypted content and sent it to a display device in encrypted form. Further description regarding the ND mode and its replacing the HDCP cipher in the display engine will be provided further below. Some embodiments further propose changes to the display and graphics hardware to allow them to use the converged engine for content protection, as will also be described in further detail below.

Some demonstrative embodiments lead to a reduction in cost associated with providing security for graphics-related content in a computing system. Some demonstrative embodiments result in customer-visible benefits in terms of reducing the overall power budget for the platform by reducing the number of cryptographic engines present on the platform. The above can translate to reduced operating costs in cloud environments and increased battery life in client environments.

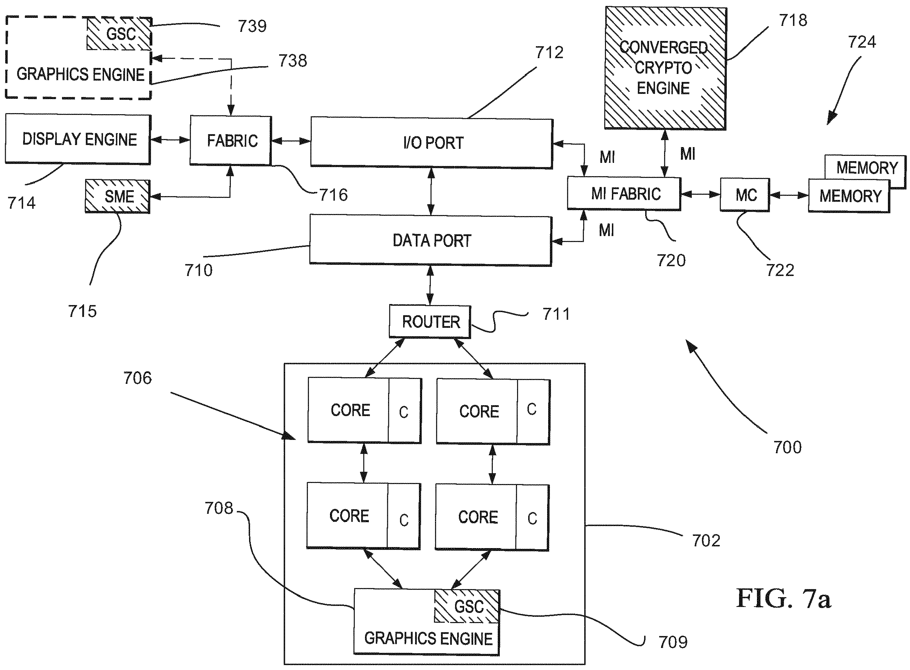

An example of a computing system architecture with a converged cryptographic engine is shown in Fig. 7a. According to Fig. 7a, the architecture 700 includes a CPU 702, which in turn includes a series of cores and caches "C" 706, and a graphics engine 708 which includes therein a security engine (SE) 709. The CPU 702 is connected to the rest of the architecture by way of router 711 and through data ports 710 and 712. Input/Output (I/O) port 712 is connected by way of fabric 716 to a display engine 714. The CPU 702 is further connected via router 711, data port 710 and I/O port 712 and through MI fabric 720 to a system memory 724 by way of a memory controller (MC) 722. A converged cryptographic engine such as a MKTME 718 is coupled to the MI fabric 720 to among other things encrypt or decrypt content to be written into or read from system memory 724. As further seen in Fig. 7a, similar to the computing system architecture of Fig. 4, the graphics engine itself can be integrated into the CPU (as shown by way of example by graphics engine 708) or discrete (as shown by way of example by graphics engine 738) and attached to the rest of the computing system using an interconnect such as a PCIe-compliant interconnect. The security controller forming the root of trust for usages such as Digital Rights Management (DRM) can either be integrated on the graphics engine itself (as seen by way of Graphics Security controller (GSC) 709 or 739) or it can be present as a separate hardware unit outside of the graphics engine, e.g., by way of a Converged Security and Management Engine (CSME) 715 on current platforms.

Fig. 7a is similar to Fig. 4, but the multiple cryptographic engines in the graphics engine and the display engine (including the PAVP engine 409 for the graphics engine 408, the cryptographic engine 418, the PAVP engine 426 and HDCP engine 428) are replaced by a single, converged cryptographic engine. The converged cryptographic engine 718, similar to the MKTME 418 of Fig. 4, has as one of its functions providing isolation in memory by allowing software to associate different keys with different memory pages. However, converged cryptographic engine 718 is further able to be shared by multiple computing system components. This converged cryptographic engine 718 is shown in this particular embodiment as being located on a memory interface of a computing system architecture, and may comprise a MKTME. Converged cryptographic engine 718 is adapted to implement a new Encrypt-but-no-Decrypt (ND) mode to allow the convergence of the various cryptographic engines used in the graphics engine and display engine according to the prior art.

Referring still to Fig. 7a, the ND mode is a mode where data or content written to the system memory 724 gets encrypted but a read of the data may or may not get decrypted based on the mode at which the converged cryptographic engine 718 is set. The ND mode may for example be used to replace the HDCP cipher 428 implemented in the display engine 414 of Fig. 4, that is, the HDCP mechanism by which the display engine would have encrypted content and sent it to a display device in encrypted form.

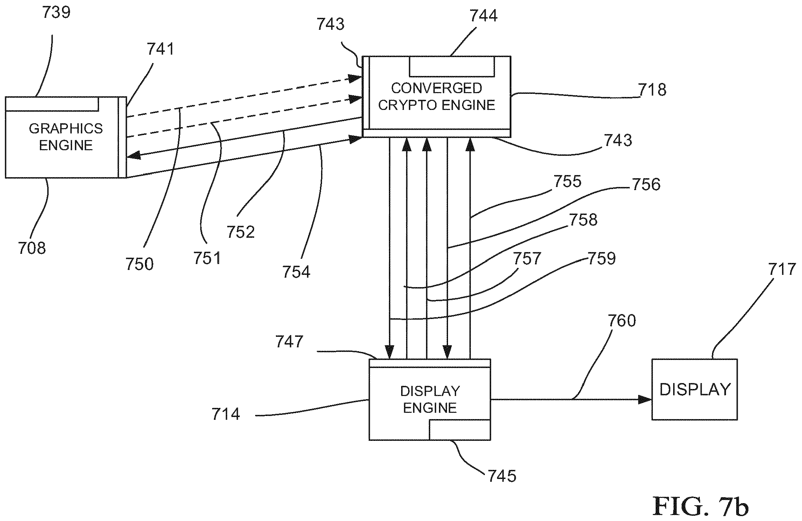

Embodiments are applicable to both integrated and discrete graphics engines, such as graphics engine 708 or graphics engine 738, and work naturally with integrated security engines. Extensions to discrete graphics engine are shown as dotted in both Figs. 4 and 7.

According to some embodiments, hardware changes may be implemented on existing cryptographic engines, such as MKTMEs, to make the ND mode possible. In addition, hardware changes may be implemented to the graphics engine and to the display engine in order for them to be able to use the benefits of a converged cryptographic engine such as converged cryptographic engine 718 of Fig. 7a.

In this respect, reference is made to Fig. 7b. Fig. 7b shows the flow of signals as between the graphics engine 708, the converged cryptographic engine 718, and the display engine 714 of Fig. 7a according to some demonstrative embodiments.

Referring to Fig. 7b, the graphics engine 708 may include one or more processors 739 therein and an input/output interface 741 connected to the one or more processors to enable communication between the one or more processors graphics engine 718. The one or more processors 739, may, according to one embodiment, send by way of signal 750, to converged cryptographic engine 718, an instruction including information on a cryptographic key to be used by the cryptographic engine to encrypt content. The instructions may include an indication to the converged cryptographic engine 718 to use the cryptographic key instead of another cryptographic key, such as a cryptographic key programmed to the graphics engine through the CPU software, to encrypt the content. The converged cryptographic engine includes an input/output interface 743, and one or more processors 744 coupled thereto. Signal 750 or a signal subsequent to signal 750 may include a write request to the cryptographic engine to write the cryptographic key in a cache memory of the converged cryptographic engine 718. In this way, the converged cryptographic engine 718 is equipped with the right key, through this key setup phase, to be used to encrypt/decrypt content when receiving write/read requests with respect to graphics-related content from the graphics engine 708. Embodiments are however not limited to the graphics engine 708 per se communicating key information to the converged cryptographic engine 718. According to some embodiments, key information may be programmed to the converged cryptographic engine 718 by way of software within the CPU, instead of by the graphics engine 718. For the latter reason, signals 750 and 751 are shown in broken lines in Fig. 7b.

The one or more processors may further send, by way of signal 751, a read request to the converged cryptographic engine 718 for the converged cryptographic engine 718 to read the content from the system memory 724, and, to receive the content by way of signal 752 from the converged cryptographic engine 718 in decrypted form as decrypted content, the converged cryptographic engine 718 having decrypted the encrypted content to generate the decrypted content using the cryptographic key. Since the converged cryptographic engine 718 had already received the information regarding the cryptographic key from the graphics engine from signals 750 and 751, it would know to use this key to encrypt content as needed before writing the content into system memory 724, and further to use this key to decrypt content when a read request is sent to it from the graphics engine to read content from the system memory 724. This sequence corresponds for example to PAVP encryption as described above, with the cryptographic key corresponding to a PAVP cryptographic key. It is noted that the content that is encrypted in this way by the cryptographic engine 718 may be received by the converged cryptographic engine 718 by way of software within a system CPU, such as CPU 702 of Fig. 7a.

According to one embodiment, for ease of reference herein, the content referred to above may be a first content, the decrypted content is a decrypted first content, and the cryptographic key a first cryptographic key, the one or more processors 739 of the graphics engine 708 being further to decode (such as decode and decompress) the decrypted first content to generate a second content, and send a write request at signal 754 to the converged cryptographic engine 718 to write the second content to the memory in encrypted form based on a second cryptographic key.

Referring still to Fig. 7b, display engine 714 may comprise one or more processors 745, an input/output interface 747 connected to the one or more processors to enable communication between the one or more processors and converged cryptographic engine 718. The one or more processors 745 may, using signal 755, send a read request to the converged cryptographic engine 718 for the converged cryptographic engine 718 to read the encrypted second content from the system memory 724, and, to receive the second content by way of signal 756 from the converged cryptographic engine 718 in decrypted form as decrypted second content, the converged cryptographic engine 718 having decrypted the encrypted second content to generate the decrypted second content using the second cryptographic key.

Thereafter, the one or more processor 745 may, using signal 757, send a write request to the cryptographic engine to write content (e.g. the decrypted second content) to the system memory 724 in encrypted form, based on a cryptographic key. The latter cryptographic key may for example correspond to a third cryptographic key, such as a HDCP cryptographic key, to be used by converged cryptographic engine 718 to encrypt the decrypted second content (the first cryptographic key being the cryptographic key used by converged cryptographic engine 718 to decrypt the first content sent to the graphics engine by way of signal 752 (e.g. PAVP cryptographic key number one), and the second cryptographic key being the cryptographic key used by converged cryptographic engine 718 to encrypt the second content sent to it by the graphics engine 718 by way of signal 754 (e.g. PAVP cryptographic key number two)). The encrypted content encrypted using this third cryptographic key may include counter-mode HDCP encrypted data. The instructions by the display engine 714 as signaled by request 757 may include an indication to the converged cryptographic engine 718 to use the third cryptographic key instead of another cryptographic key, such as a cryptographic key programmed to the display engine through the CPU software, to encrypt the content to generate an encrypted third content. The one or more processors 745 may then, using signal 758, send a read request to the converged cryptographic engine 718 to read the encrypted third content from system memory 724, and may then, through signal 759, receive the encrypted third content from the converged cryptographic engine 718 without decryption by the cryptographic engine. In this manner, the converged cryptographic engine 718 would have used the ND mode in generating signal 759 to send encrypted content to the display engine 714. The one or more processors may then send, using signal 760, the encrypted third content encrypted using the third cryptographic key (such as using HDCP encryption) to a display device 717 for display.

As suggested above, the content received by way of signal 759 may be referred to as a third content, and the cryptographic key used to encrypt the third content may be referred to as a third cryptographic key. According to one embodiment, the one or more processors may, prior to sending the write request at signal 758, send a read request to the converged cryptographic engine 718 to read the second content from the system memory 724, this second content corresponding to content sent to the converged cryptographic engine 718 by the graphics engine by way of signal 754, and encrypted by the converged cryptographic engine 718 using the second cryptographic key. The one or more processors 745 may then receive by way of signal 756 the second content from the converged cryptographic engine 718 in decrypted form as a decrypted first content, the cryptographic engine having decrypted the second content to generate the decrypted second content using the second cryptographic key; and process the decrypted second content to generate the third content.

The mechanisms detailed above with respect to the graphics engine 708 and display engine 714 using a converged cryptographic engine 718 advantageously obviate the need for separate PAVP and HDCP engines within the graphics engine and/or display engine, and hence the need for cache memory to store content locally at each of the above engines. Instead, the reads and writes can be made to the system memory, and the encryption and decryption may be carried out by a converged cryptographic engine 718. Embodiments therefore among other things make computing faster as security operations may take place for the most part within a converged cryptographic engine, doing away with the need for storing content within dispersed caches within the computing system.

### Encrypt-but-No-Decrypt (ND) Mode

As previously noted, embodiments introduce a new mode for the converged cryptographic engine, the encrypt-but-no-decrypt or simply the no-decrypt (ND) mode. In this mode, data written to memory is encrypted but data read from memory may, based on application needs, be returned to the requester without any decryption. In other words, the converged cryptographic engine acts as an encryptor for the requester, but may choose to decrypt or not decrypt based on application needs.

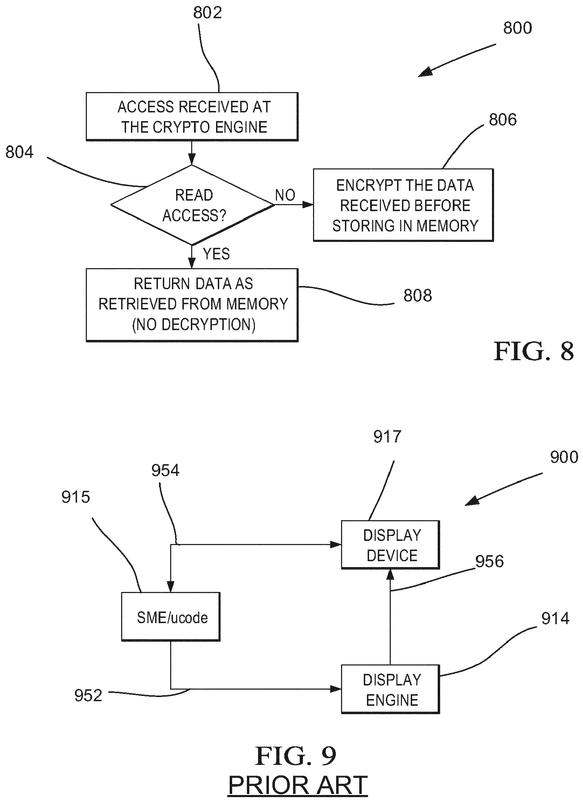

Reference is now made to Fig. 8. Fig. 8 is a flow-chart 800 showing a flow chart for an activated ND mode for the converged cryptographic engine 718. As shown in Fig. 8, when the ND mode in the converged cryptographic engine 718 is active, and when the converged cryptographic engine 718, such as a MKTME, receives an access request at 802, it determines at 804 whether such access request is a read access request. If no, the MKTME may at 806 encrypt the data received before accessing the system memory to store the encrypted data. If yes, the MKTME may, at 808, return the data as retrieved from memory without any decryption. Operation 808 corresponds by way of example for the operation associated with signal 759 in Fig. 7b, where the converged cryptographic engine 718 returns the encrypted third content to the display engine 714 without decryption, for example to enable HDCP protection of content before such content is sent to a display device.

### Enumeration and activation

The new mode disclosed in this invention may, according to some embodiments, be enumerated to software using a capabilities model-specific register (MSR) and BIOS (basic input/output system). The BIOS can use the activated MSR to activate the new ND mode in the converged cryptographic engine 718 as one of the supported modes for the converged cryptographic engine keys. The software may set up a Key ID with ND mode using a PCONFIG instruction. According to some embodiments, the ND mode may implement encryption using counter-mode encryption or AES (Advanced Encryption Standard) XEX Tweakable Block Cipher with Ciphertext Stealing (XTS) (AES-XTS). The ND mode with counter-mode encryption and AES-XTS may be enumerated as two separate algorithms in the capabilities register and may preferably be activated separately by the BIOS.

As suggested above converged cryptographic engine 718 may be exposed to the software stack by way of MSRs, such as, for example, a capability MSR and an activation MSR. The capability MSR may for example indicate, among other things, the number of keys that the converged cryptographic engine 718 may have at its disposal, and the cryptographic algorithms that the converged cryptographic engine may support. According to some embodiments, a new PCONFIG instruction may be used to indicate among other things: KeylD, key, and mode (i.e.: whether the ND mode is or is not to be made available). Once the BIOS knows that the ND mode capability is available (for example, the capability MSR may indicate the availability of the new ND mode with AES XTS 128), the software may use it to implement an encrypt when write into the system memory, but do not decrypt when a read request for reading from the memory is received, based on application needs (for example when using the HDCP cipher). The ND mode, once indicated as available, may according to some embodiments actually be activated through an activation MSR separate from the capability MSR. The BIOS may, for example, communicate to the MSR to indicate that all modes are allowed to be used by the software (since the BIOS might not want to allow all modes). If the BIOS indicates that the ND mode is allowed, it may, according to one embodiment, set up a bit vector in a ND mode field to indicate that an encrypt and decrypt, and an encrypt but no decrypt, are supported or not supported for future modes, in the contest of the ND mode having been indicated by the capability MSR as being allowed. At runtime, the software in VMM may use the PCONFIG instruction to the converged cryptographic engine to indicate whether the ND mode is allowed, and whether, if allowed, the ND mode is to be activated or not activated.

Software running on the CPU core(s) may be configured to read the capability MSR through an instruction called a "read MSR." For a converged cryptographic engine in the form of a MKTME, a TME capability MSR may include a particular index in the context of the read MSR. The software running on the CPU core(s) may thus use the read MSR instruction to read a number of bits on the TME capabilities MSR, where one or more bits of the number of bits correspond to the ND mode in the 64 bit register. If the one or more bits are set in a predetermined manner (for example at 1 or at 0 or according to a predetermined pattern of 1's and 0's), according to one embodiment, the software will know the associated hardware supports the ND mode. On the CPU side, the CPU may be configured to determine the one bit through fuses. Once the software, such as the initialization software of device drivers at system setup, has determined the capability of the converged cryptographic engine through the capabilities MSR, it may, according to some embodiments, communicate such capabilities to the graphics engine and/or the display engine.

A table is provided below for the enumeration to software of the ND Mode according to one exemplary embodiment. The table shows MSR name and bit fields against their MSR/bit description, and further includes comments at the last column, according to one possible embodiment. The fields that may be changed according to some embodiments are shown in italics. As suggested in the table below, a bit 16 (making up a ND mode field) of the MSR bit field may be allocated to indicate, whether, yes or no, the ND mode is supported within a converged cryptographic engine.

| Architectural MSR Name and bit fields (Former MSR Name) | MSR/Bit Description | Comment |
|---|---|---|
| IA32_TME_CAPABILITY MSR | Memory Encryption Capability MSR | One MSR for TME and MKTME |
| 0 | Supports for AES-XTS 128 bit encryption algorithm | NIST standard |
| 15:1 | [Reserved] | For additional encryption algorithms |
| *16* | *ND Mode supported* | *Enumerates support for ND Mode* |
| 23:*17* | *[Reserved]* | |
| 31:24 | [Reserved] | For future TME usage |
| 35:32 | MK_TME_MAX_KEYID_BITS | 4 bits allows for a max value of 15, which could address 32K keys |
| | Number of bits which can be allocated for usage as key identifiers for multi-key memory encryption. Zero if MKTME is not supported | |
| 50:36 | MK_TME_M AX_KEYS Indicates the maximum number of keys which are available for usage. | KeyID 0 is reserved for TME and this number does not include the TME key. Max value is 32K-1 keys |
| | This value may not be a power of 2. | |
| | This maximum value of this field will be (2^MK_TME_MAX_KEYID_BITS)-1 Zero if MKTME is not supported | |
| 63:51 | [Reserved] | |

The BIOS in this way may discover support for the ND mode using the capability MSR and may then activate the ND mode, making it available for use through an activation MSR such as the one shown below by way of example according to one embodiment. In this capability MSR bit field, bit 8, as indicated in italics below, may be used to indicate whether the ND mode ought to be activated in a converged cryptographic engine that supports the ND mode.

| Architectural MSR Name and bit fields (Former MSR Name) | MSR/Bit Description | Comment |
|---|---|---|
| IA32_TME_ACTIVATE MSR | | |
| 0 | Lock RO - Will be set upon suconverged cryptographic enginessful WRMSR (Or first SMI); written value ignored. | |
| 1 | TME Enable RWL - Enable Total Memory encryption using CPU generated ephemeral key based on hardware random number generator | This bit also enables & locks MKTME, MKTME cannot be enabled without enabling TME |
| 2 | Key select | |
| | 0 - Create a new TME key (expected cold/warm boot) | |
| | 1-Restore the TME key from storage (Expected when resume from standby) | |
| 3 | Save TME key for standby - Save key into storage to be used when resume from standby | May not be supported in all CPUs |
| 7:4 | TME policy/encryption algorithm Only algorithms enumerated in IA32_TME_ CAPABILITY are allowed For example: 0000 - AES-XTS-128 Other values are invalid | TME Encryption algorithm to be used |
| 8 | *ND Mode activated* | |
| 31:9 | Reserved | |
| 35:32 | Reserved if MKTME is not enumerated | |
| | MK_TME_KEYID_BITS The number of key identifier bits to allocate to MKTME usage. Similar to enumeration, this is an encoded value. | Example: To support 255 keys, this field would be set to a value of 8. |
| | Writing a value greater than | |
| | MK_TME_MAX_KEYID_BITS will result in #GP | |
| | Writing a non-zero value to this field will #GP if bit 1 of EAX (TME Enable) is not also set to '1, as TME must be enabled to use MKTME. | |
| 47:36 | [Reserved] | |
| 63:48 | Reserved if MKTME is not enumerated | |
| | MK_TME_ CRYPTO_ ALGS | |
| | Bit 48: AES-XTS 128 Bit 63:49: Reserved (#GP) | |
| | Bitmask for BIOS to set which encryption algorithms are allowed for MKTME, would be later enforced by the key loading ISA ('1 = allowed) | |

### Programming the ND mode

As described above, the ND mode may, according to one embodiment, be enabled by software, and may require a capability for software to program a Key ID in this mode. A PCONFIG instruction to program the MKTME may be used to provide instruction set architecture (ISA) support for Multi-key cryptographic engine programming for secure public clouds. The PCONFIG instruction may be invoked by software for managing the keys/protection for a domain using the MKTME. PCONFIG may support multiple leaves, and a leaf function may invoked by setting the appropriate leaf value in the 32 bit EAX register. The 64 bit registers RBX, RCX, and RDX typically have a leaf-specific purpose. PCONIFG currently only supports one leaf, KEY_PROGRAM, which is used to manage the key associated with a domain. The KEY_PROGRAM operation may work by using the KEY_PROGRAM_STRUCT. Table 1 shows KEY_PROGRAM_STRUCT in memory used by the PCONIFG instruction to bind a key to a KEYID.

**Table 1: KEY PROGRAM STRUCTURE**

| Field | Offset (bytes) | Size (bytes) | Comments |
|---|---|---|---|
| KEYID | 0 | 2 | Key Identifier |
| | | | KeyID control: |
| KEYID_CTRL | 2 | 4 | • Bits [7:0]: COMMAND |
| | | | • Bits [23:8]: ENC_ALG |
| | | | • Bits [31:24]: RSVD, MBZ |
| RSVD | 6 | 58 | RSVD, MBZ |
| KEY_FIELD_1 | 64 | 64 | Software supplied KeyID data key or entropy for KeyID data key |
| KEY_FIELD_2 | 128 | 64 | Software supplied KeyID tweak key or entropy for KeyID tweak key |

### PAVP usage using Converged Engine

As discussed in the context of Fig. 4, in a prior art approach, the graphics engine decrypts the compressed content received from the content provider with a first key, decodes it, and re-encrypts it with a second key that is shared with the display engine. In order for the graphics engine and the display engine to use the converged cryptographic engine proposed according to embodiments, the software thus needs to set up two KeylDs as described for example in the context of Figs. 7a and 7b. The first KeylD may be programmed with the key used to encrypt the compressed content, for example by the converged cryptographic engine 718 of Fig. 7b. On a read initiated by the graphics engine, the compressed content is automatically decrypted with the first key, and sent to the graphics engine decrypted, as depicted by way of example using signal 752 of Fig. 7b. The graphics engine then proceeds to process the content (e.g. decode/decompress the content), and write it this decompressed content to memory using the key shared with the display engine, that is, using the second key. The second KeylD may be setup by software (e.g., by a display/graphics driver) to represent a key that is shared between the graphics engine and the display engine. The display engine may use this same second KeylD to access the decompressed content by way of a read request to the converged cryptographic engine (CCE), as depicted by way of example using signal 755 of Fig. 7b, for the purpose of sending the content to a display engine. On a read from memory at 756, the converged cryptographic engine naturally decrypts the content before returning to the display engine using the second key.

According to one embodiment, the software may set up the KeylDs appropriately to allow the use of the right key for encryption and decryption as appropriate. However, it might not always be possible for software to have direct control over the keys used in the PAVP flow. As an example, the key between the graphics engine the display engine may be set up directly by the graphics engine without software involvement. According to the latter embodiment, a key management logic in the graphics engine hardware may be configured to setup the key (first key and/or second key) in the CCE. More specifically, the converged cryptographic engine may expose a bank of key registers writeable only by the graphics engine (only accessible to the graphics engine using fabric access control). The graphics engine key management logic may be configured to write to these key registers for example before writing decompressed, encrypted content to memory using the second key shared with the display engine. The graphics engine hardware may, according to an embodiment, assert a signal (e.g. a single bit on the memory bus, or a plurality bits on the memory bus) to indicate to the converged cryptographic engine hardware that the key setup by the graphics engine hardware must be used for access, irrespective of the KeylD associated with that request that may have been sent to the converged cryptographic engine hardware by way of software.

Current PAVP solutions may use AES-ECB for PAVP content protection. However, AES-ECB can disadvantageously reveal patterns of the image being encrypted and hence result in loss of confidentiality. However, a converged cryptographic engine according to some embodiments may use AES-XTS, which is a tweaked cipher and does not reveal patterns as does AES-ECB. Using AES-XTS in conjunction with a converged cryptographic engine according to some embodiments can greatly benefit PAVP and other secure display usages that are primarily proposed to protect the confidentiality of bitmaps (e.g., protected e-reader).

### HDCP usage using Converged Cryptographic Engine

As noted previously, an HDCP protocol may be used to encrypt the link between the display panel and the display engine. The display engine and display device exchange a key as part of the HDCP protocol which is used to protect content flowing over the link. HDCP uses counter mode encryption to encrypt the link. As noted with respect to the prior art in the context of Fig. 4, a HDCP encryption engine implemented in a display engine according to the state of the art supports counter mode encryption to support HDCP usage. Figure 9 shows the high-level flow for HDCP key setup on current platforms.

Referring now in particular to Fig. 9, the figure shows the flow 900 of signals according to the prior art between a display engine 914, a CSME 915, and a display panel/device 917, the display engine 914 and CSME 915 correspond for example to display engine 414 and CSME 415 of Fig. 4. CSME 415 on a trusted entity (e.g., an enclave) may at signal 954 perform an authentication and key exchange (as part of the HDCP protocol) with the display engine 914. The secret key established, corresponding for example to the HDCP key, may then be injected to the display engine 914 at signal 952. The display engine 914 may use this key to encrypt the frames to be sent via signal 956 to the display panel for display using its internal HDCP engine. The display panel may decrypt the content received and displays it on the screen.

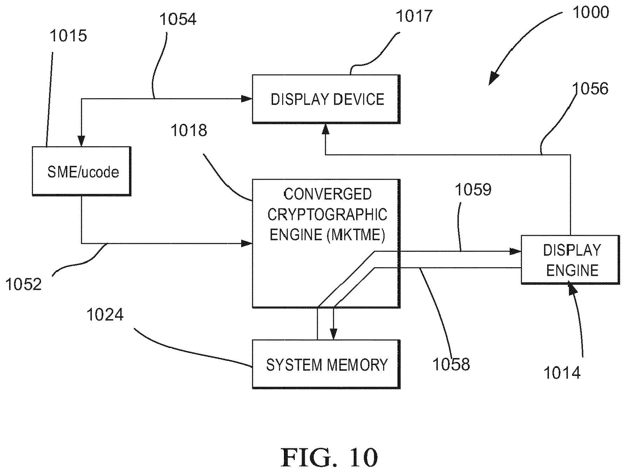

With proposed embodiments, a modified HDCP flow 1000 using a converged cryptographic engine is shown in Figure 10. According to some embodiments and referring in particular to Fig. 10, the ND mode with counter mode encryption introduced herein may be used to support the HDCP use case. Like elements and features in Fig. 10 are referred to with like reference numerals as compared with the elements and features of Fig. 9 described above. In Fig. 10, flow 1000 involves a display engine 1014, a CSME 1015, display device 1017, converged cryptographic engine 1018 and system memory 1024. The display engine 1014, CSME 1015, display device 1017, converged cryptographic engine 1018 and system memory 1024 may correspond to display engine 714, a CSME 715, display device 717, converged cryptographic engine 718 and system memory 724 described in the context of Figs. 7a/7b. According to some embodiments, the authentication and key exchange using signal 1054 may proceed in the same manner as described in the context of Fig. 9 in relation to signal 954. The key thus established, corresponding for example to a HDCP key, may then be programmed using signal 1052 to the converged cryptographic engine 1018. The latter may be achieved by reserving key registers in the converged cryptographic engine writeable only by the CSME or ucode 1015 to receive the key to be used for HDCP encryption. The display engine 1014 achieves HDCP encryption by simply writing the content to protect to the system memory 1024 using signal 1058 (which for example may correspond to signal 758 of Fig. 7b). The latter will cause the content to be encrypted with the HDCP key setup in the previous step with counter mode encryption in the system memory 1024. The display engine 1014 then proceeds to read the data from system memory 1024 using signal 1059 (which may correspond to signal 759 of Fig. 7b). Since for HDCP encryption, the mode is set to the newly disclosed ND mode, the data read from memory will not be decrypted, and will therefore returned to the display engine 1014 as is. This data is the counter-mode encrypted data expected by the display device 1017. The display engine 1014 then sends this protected data as previously to the display device 1017 using signal 1056 (which may correspond to signal 756 of Fig. 7b), which display device 1017 decrypts and shows the content on the screen. Note that for the display engine requests to use the right key and ND mode, there can be an indication sent from the display engine to the CCE.

In the ND mode disclosed in the context of embodiments, the converged cryptographic engine may be used as an encryptor. In other words, the data may be sent to the converged cryptographic engine to get encrypted and then read in encrypted form out of memory (without decryption). For writes, the ND mode may require that the write requests which are used to send the data to memory appear as stores to the memory subsystem even in the presence of caches on the initiator side. In order to do this, the embodiments propose the use of direct or non-temporal stores in the memory subsystem. With direct/non-temporal stores, the write request and data is always sent to memory, which ensures that the data gets encrypted with the correct mode of encryption using the converged engine on the memory path. For reads done by the initiator, caching requires no special handling, and the initiator can use caches as they would without the use of embodiments.

As noted previously, the graphics engine itself may be integrated with the CPU, or be discrete, attached to the system using an interface such as PCIe. The security controller forming the root of trust for usages such as DRM can either be integrated on the GPU itself (e.g. in the form of a Graphics Security controller (GSC)) or it can be present as a separate hardware unit outside of the GPU, e.g., CSME on current platforms. While embodiments described using an integrated graphics engine and CSME as root of trust, embodiments can easily be extended to discrete graphics engine and work naturally with integrated security engines. These extensions are shown as dotted in Fig. 7a.

The operations described with reference to the preceding figures illustrate only some of the possible scenarios that may be executed by, or within, a computing system architecture, such as architecture 700 of Fig. 7a. Some of these operations may be deleted or removed where appropriate, or these operations may be modified or changed considerably without departing from the scope of the discussed concepts. In addition, the timing of these operations may be altered considerably and still achieve the results taught in this disclosure. As one example, the processes depicted in the accompanying figures do not necessarily require the particular order shown, or sequential order, to achieve the desired results. In certain implementations, multitasking and parallel processing may be advantageous. The preceding operational flows have been offered for purposes of example and discussion. Substantial flexibility is provided by the system in that any suitable arrangements, chronologies, configurations, and timing mechanisms may be provided without departing from the teachings of the discussed concepts.

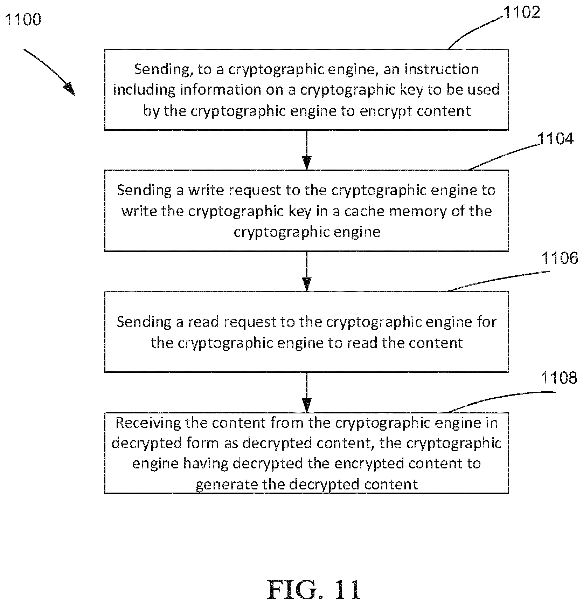

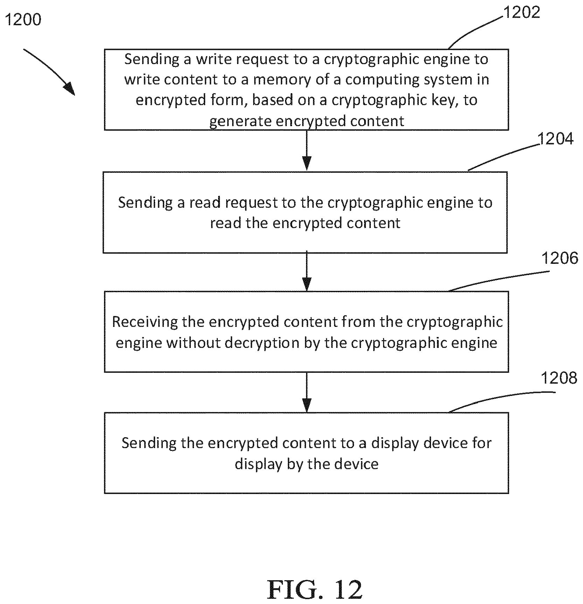

Reference is now made to Figs. 11 and 12, which depict flowcharts according to two embodiments.

Referring first to Fig. 11, a process 1100 according to one embodiment involves, at operation 1102 sending, to the cryptographic engine, an instruction including information on a cryptographic key to be used by the cryptographic engine to encrypt content; at operation 1104, sending a write request to the cryptographic engine to write the cryptographic key in a cache memory of the cryptographic engine; at operation 1106, sending a read request to the cryptographic engine for the cryptographic engine to read the content; and at operation 1108, receiving the content from the cryptographic engine in decrypted form as decrypted content, the cryptographic engine having decrypted the encrypted content to generate the decrypted content. The process 1100 may for example be performed by a graphics engine that sends the first and/or second PAVP cryptographic key to the registers of a converged cryptographic engine for encryption or decryption functions to be performed by the CCE.

Referring next to Fig. 12, a process 1200 according to another embodiment involves, at operation 1202 sending a write request to a cryptographic engine to write content to a memory of a computing system in encrypted form, based on a cryptographic key, to generate encrypted content; at operation 1204, sending a read request to the cryptographic engine to read the encrypted content; at operation 1206, receiving the encrypted content from the cryptographic engine without decryption by the cryptographic engine; and at operation 1208, sending the encrypted content to a display device for display by the device.

As used herein, unless expressly stated to the contrary, use of the phrase 'at least one of' refers to any combination of the named items, elements, conditions, or activities. For example, 'at least one of X, Y, or Z' is intended to mean any of the following: 1) at least one X, but not Y and not Z; 2) at least one Y, but not X and not Z; 3) at least one Z, but not X and not Y; 4) at least one X and at least one Y, but not Z; 5) at least one X and at least one Z, but not Y; 6) at least one Y and at least one Z, but not X; or 7) at least one X, at least one Y, and at least one Z.

Unless expressly stated to the contrary, the numbering adjectives 'first', 'second', 'third', etc., are intended to distinguish the particular terms (e.g., element, condition, module, activity, operation, claim element, etc.) they precede, but are not intended to indicate any type of order, rank, importance, temporal sequence, or hierarchy of the modified term. For example, 'first X' and 'second X' are intended to designate two separate X elements that are not necessarily limited by any order, rank, importance, temporal sequence, or hierarchy of the two elements.

References in the specification to "one embodiment," "an embodiment," "some embodiments," etc., indicate that the embodiment(s) described may include a particular feature, structure, or characteristic, but every embodiment may or may not necessarily include that particular feature, structure, or characteristic. Moreover, such phrases are not necessarily referring to the same embodiment.

While this specification contains many specific implementation details, these should not be construed as limitations on the scope of any embodiments or of what may be claimed, but rather as descriptions of features specific to particular embodiments of the subject matter disclosed herein. Certain features that are described in this specification in the context of separate embodiments can also be implemented in combination in a single embodiment. Conversely, various features that are described in the context of a single embodiment may also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination. Numerous other changes, substitutions, variations, alterations, and modifications may be ascertained to one skilled in the art and it is intended that the present disclosure encompass all such changes, substitutions, variations, alterations, and modifications as falling within the scope of the appended claims.

### OTHER NOTES AND EXAMPLES

The following examples pertain to embodiments in accordance with this specification.
Example 1 includes a device of a computing system, the device comprising one or more processors, and an input/output interface connected to the one or more processors to enable communication between the one or more processors and a computing engine of the computing system, the one or more processors to: receive an instruction including information on a cryptographic key; determine whether a no-decrypt mode is to be active or inactive with respect to a read request from the computing engine; in response to receiving the read request from the computing engine to read content from a memory of the computing system, and in response to a determination that the no-decrypt mode is inactive, decrypt the content using the key to generate a decrypted content and send the decrypted content to the computing engine; and in response to receiving the read request from the computing engine of the computing system to read the content from a memory of the computing system, and in response to a determination that the no-decrypt mode is active, send the content to the computing engine without decrypting the content.
Example 2 includes the subject matter of Example 1, and optionally, wherein the one or more processors are further to: receive a first instruction including information on a first cryptographic key and a second instruction including information on a second cryptographic key; determine that the no-decrypt mode is to be inactive with respect to a read request from a first computing engine of the computing system to read a first content from the memory of the computing system; determine that the no-decrypt mode is to be inactive with respect to a read request from a second computing engine of the computing system to read a second content from the memory of the computing system; in response to receiving the read request from the first computing engine, decrypt the first content, using the first cryptographic key, to generate a decrypted first content, and send the decrypted first content to the first computing engine, the first computing engine to process the decrypted first content to generate the second content; in response to receiving a write request from the first computing engine to write the second content to the memory, encrypt the second content, using the second cryptographic key, to generate an encrypted second content, and write the encrypted second content to the memory; and in response to receiving the read request from the second computing engine, decrypt the second content, using the second cryptographic key, to generate a decrypted second content, and send the decrypted second content to the second computing engine, the second computing engine to process the decrypted second content to generate processed second content.
Example 3 includes the subject matter of Example 2, and optionally, wherein the one or more processors are further to: receive a third instruction including information on a third cryptographic key; determine that the no-decrypt mode is to be active with respect to a read request from the second computing engine to read the processed second content from the memory of the computing system; in response to receiving a write request from the second computing engine to write the processed second content to the memory, encrypt the processed second content, using the third cryptographic key, to generate encrypted processed second content, and write the encrypted processed second content to the memory; and in response to receiving the read request from the second computing engine to read the encrypted processed second content, send, without decrypting, the encrypted processed second content to the second computing engine.
Example 4 includes the subject matter of Example 2, and optionally, wherein the first computing engine is a graphics processing unit, and the second computing engine is a display engine.
Example 5 includes the subject matter of Example 1, and optionally, wherein the instruction further includes: information on a key identifier (KeyID) corresponding to the cryptographic key; and a no-decrypt (ND) mode field, the one or more processors to decode the instruction to determine the KeylD, and to determine, based on the ND mode field, whether the no-decrypt mode is to be active or inactive.
Example 6 includes the subject matter of Example 2, and optionally, further including cache memory, the cache memory coupled to the one or more processors, wherein the one or more processors are to: receive the second instruction including the information on the second cryptographic key from the first computing engine; in response to receiving the second instruction, expose the cache memory to the first computing engine to allow the first computing engine to access the cache memory to write the information on the second cryptographic key therein; store the information on the second cryptographic key in the cache memory; and in response to receiving the write request from the first computing engine to write the second content to the memory, encrypt the second content, using the second cryptographic key stored in the cache memory, to generate the encrypted second content before writing the encrypted second content to the memory.
Example 7 includes the subject matter of Example 3, and optionally, further including cache memory, the cache memory coupled to the one or more processors, wherein the one or more processors are to: receive the third instruction including the information on the third cryptographic key from the first computing engine; in response to receiving the third instruction, expose the cache memory to the first computing engine to allow the first computing engine to access the cache memory to write the information on the third cryptographic key therein; store the information on the third cryptographic key in the cache memory; and in response to receiving a write request from the second computing engine to write the processed second content to the memory, encrypt the processed second content, using the third cryptographic key stored in the cache memory, to generate the encrypted processed second content before writing the encrypted processed second content to the memory.
Example 8 includes the subject matter of Example 1, and optionally, wherein the one or more processors are to: receive the instruction including the information on the cryptographic key from the computing engine; receive an instruction including information on another cryptographic key from a central processing unit of the computing system, wherein the cryptographic key and said another cryptographic key are both associated with at least one of encryption or decryption of the content; and in response to receiving a request from the computing engine to at least one of read the content from the memory or write the content to the memory, use the cryptographic key to at least one of decrypt the content or encrypt the content without using said another cryptographic key.
Example 9 includes the subject matter of Example 1, and optionally, the one or more processors to receive central processing unit (CPU) instructions from a CPU of the computing system, the CPU instructions including instructions to program the one or more processors with a capability to implement the no-decrypt mode.
Example 10 includes the subject matter of Example 1, and optionally, further including the memory, the memory including a system memory of the computing system.
Example 11 includes the subject matter of Example 10, and optionally, further including a memory controller connected to the memory and to the one or more processors.
Example 12 includes a product comprising one or more tangible computer-readable non-transitory storage media comprising computer-executable instructions operable to, when executed by at least one computer processor, cause the at least one computer processor to implement operations at a computing system, the operations comprising: receiving an instruction including information on a cryptographic key; determining whether a no-decrypt mode is to be active or inactive with respect to a read request from a computing engine of the computing system; in response to receiving the read request from a computing engine of the computing system to read content from a memory of the computing system, and in response to a determination that the no-decrypt mode is inactive, decrypting the content using the key to generate a decrypted content and sending the decrypted content to the computing engine; and in response to receiving the read request from a computing engine of the computing system to read the content from a memory of the computing system, and in response to a determination that the no-decrypt mode is active, sending the content to the computing engine without decrypting the content.
Example 13 includes the subject matter of Example 12, and optionally, wherein the operations further include: receiving a first instruction including information on a first cryptographic key and a second instruction including information on a second cryptographic key; determining that the no-decrypt mode is to be inactive with respect to a read request from a first computing engine of the computing system to read a first content from the memory of the computing system; determining that the no-decrypt mode is to be inactive with respect to a read request from a second computing engine of the computing system to read a second content from the memory of the computing system; in response to receiving the read request from the first computing engine, decrypting the first content, using the first cryptographic key, to generate a decrypted first content, and sending the decrypted first content to the first computing engine, the first computing engine to process the decrypted first content to generate the second content; in response to receiving a write request from the first computing engine to write the second content to the memory, encrypting the second content, using the second cryptographic key, to generate an encrypted second content, and writing the encrypted second content to the memory; and in response to receiving the read request from the second computing engine, decrypting the second content, using the second cryptographic key, to generate a decrypted second content, and sending the decrypted second content to the second computing engine, the second computing engine to process the decrypted second content to generate processed second content.
Example 14 includes the subject matter of Example 13, and optionally, wherein operations further include: receiving a third instruction including information on a third cryptographic key; determining that the no-decrypt mode is to be active with respect to a read request from the second computing engine to read the processed second content from the memory of the computing system; in response to receiving a write request from the second computing engine to write the processed second content to the memory, encrypting the processed second content, using the third cryptographic key, to generate encrypted processed second content, and writing the encrypted processed second content to the memory; and in response to receiving the read request from the second computing engine to read the encrypted processed second content, sending, without decrypting, the encrypted processed second content to the second computing engine.
Example 15 includes the subject matter of Example 13, and optionally, wherein the first computing engine is a graphics processing unit, and the second computing engine is a display engine.
Example 16 includes the subject matter of Example 12, and optionally, wherein the instruction further includes: information on a key identifier (KeyID) corresponding to the cryptographic key; and a no-decrypt (ND) mode field, the one or more processors to decode the instruction to determine the KeylD, and to determine, based on the ND mode field, whether the no-decrypt mode is to be active or inactive.
Example 17 includes the subject matter of Example 13, and optionally, the operations further including: receiving the second instruction including the information on the second cryptographic key from the first computing engine; in response to receiving the second instruction, exposing a cache memory to the first computing engine to allow the first computing engine to access the cache memory to write the information on the second cryptographic key therein; storing the information on the second cryptographic key in the cache memory; and in response to receiving the write request from the first computing engine to write the second content to the memory, encrypt the second content, using the second cryptographic key stored in the cache memory, to generate the encrypted second content before writing the encrypted second content to the memory.
Example 18 includes the subject matter of Example 14, and optionally, the operations further including: receiving the third instruction including the information on the third cryptographic key from the first computing engine; in response to receiving the third instruction, exposing a cache memory coupled to the at least one computer processor to the first computing engine to allow the first computing engine to access the cache memory to write the information on the third cryptographic key therein; storing the information on the third cryptographic key in the cache memory; and in response to receiving a write request from the second computing engine to write the processed second content to the memory, encrypting the processed second content, using the third cryptographic key stored in the cache memory, to generate the encrypted processed second content before writing the encrypted processed second content to the memory.
Example 19 includes the subject matter of Example 12, and optionally, the operations further including: receiving the instruction including the information on the cryptographic key from the computing engine; receiving an instruction including information on another cryptographic key from a central processing unit of the computing system, wherein the cryptographic key and said another cryptographic key are both associated with at least one of encryption or decryption of the content; and in response to receiving a request from the computing engine to at least one of read the content from the memory or write the content to the memory, using the cryptographic key to at least one of decrypt the content or encrypt the content without using said another cryptographic key.
Example 20 includes the subject matter of Example 12, and optionally, the operations further including receiving central processing unit (CPU) instructions from a CPU of the computing system, the CPU instructions including instructions to program the one or more processors with a capability to implement the no-decrypt mode.
Example 21 includes a method including: receiving an instruction including information on a cryptographic key; determining whether a no-decrypt mode is to be active or inactive with respect to a read request from a computing engine of a computing system; in response to receiving the read request from a computing engine of the computing system to read content from a memory of the computing system, and in response to a determination that the no-decrypt mode is inactive, decrypting the content using the key to generate a decrypted content and sending the decrypted content to the computing engine; and in response to receiving the read request from a computing engine of the computing system to read the content from a memory of the computing system, and in response to a determination that the no-decrypt mode is active, sending the content to the computing engine without decrypting the content.
Example 22 includes the subject matter of Example 21, and optionally, including: receiving a first instruction including information on a first cryptographic key and a second instruction including information on a second cryptographic key; determining that the no-decrypt mode is to be inactive with respect to a read request from a first computing engine of the computing system to read a first content from the memory of the computing system; determining that the no-decrypt mode is to be inactive with respect to a read request from a second computing engine of the computing system to read a second content from the memory of the computing system; in response to receiving the read request from the first computing engine, decrypting the first content, using the first cryptographic key, to generate a decrypted first content, and sending the decrypted first content to the first computing engine, the first computing engine to process the decrypted first content to generate the second content; in response to receiving a write request from the first computing engine to write the second content to the memory, encrypting the second content, using the second cryptographic key, to generate an encrypted second content, and writing the encrypted second content to the memory; and in response to receiving the read request from the second computing engine, decrypting the second content, using the second cryptographic key, to generate a decrypted second content, and sending the decrypted second content to the second computing engine, the second computing engine to process the decrypted second content to generate processed second content.
Example 23 includes the subject matter of Example 22, and optionally, further including: receiving a third instruction including information on a third cryptographic key; determining that the no-decrypt mode is to be active with respect to a read request from the second computing engine to read the processed second content from the memory of the computing system; in response to receiving a write request from the second computing engine to write the processed second content to the memory, encrypting the processed second content, using the third cryptographic key, to generate encrypted processed second content, and writing the encrypted processed second content to the memory; and in response to receiving the read request from the second computing engine to read the encrypted processed second content, sending, without decrypting, the encrypted processed second content to the second computing engine.
Example 24 includes the subject matter of Example 22, and optionally, wherein the first computing engine is a graphics processing unit, and the second computing engine is a display engine.
Example 25 includes the subject matter of Example 21, and optionally, wherein the instruction further includes: information on a key identifier (KeyID) corresponding to the cryptographic key; and a no-decrypt (ND) mode field, the method further including decoding the instruction to determine the KeylD, and to determine, based on the ND mode field, whether the no-decrypt mode is to be active or inactive.
Example 26 includes the subject matter of Example 22, and optionally, further including: receiving the second instruction including the information on the second cryptographic key from the first computing engine; in response to receiving the second instruction, exposing a cache memory to the first computing engine to allow the first computing engine to access the cache memory to write the information on the second cryptographic key therein; storing the information on the second cryptographic key in the cache memory; and in response to receiving the write request from the first computing engine to write the second content to the memory, encrypting the second content, using the second cryptographic key stored in the cache memory, to generate the encrypted second content before writing the encrypted second content to the memory.
Example 27 includes the subject matter of Example 23, and optionally, further including: receiving the third instruction including the information on the third cryptographic key from the first computing engine; in response to receiving the third instruction, exposing a cache memory to the first computing engine to allow the first computing engine to access the cache memory to write the information on the third cryptographic key therein; storing the information on the third cryptographic key in the cache memory; and in response to receiving a write request from the second computing engine to write the processed second content to the memory, encrypting the processed second content, using the third cryptographic key stored in the cache memory, to generate the encrypted processed second content before writing the encrypted processed second content to the memory.
Example 28 includes the subject matter of Example 21, and optionally, further including: receiving the instruction including the information on the cryptographic key from the computing engine; receiving an instruction including information on another cryptographic key from a central processing unit of the computing system, wherein the cryptographic key and said another cryptographic key are both associated with at least one of encryption or decryption of the content; and in response to receiving a request from the computing engine to at least one of read the content from the memory or write the content to the memory, using the cryptographic key to at least one of decrypt the content or encrypt the content without using said another cryptographic key.
Example 29 includes the subject matter of Example 21, and optionally, the method including receiving central processing unit (CPU) instructions from a CPU of the computing system, the CPU instructions including instructions to program with a capability to implement the no-decrypt mode.
Example 30 includes device including: means for receiving an instruction including information on a cryptographic key; means for determining whether a no-decrypt mode is to be active or inactive with respect to a read request from a computing engine of a computing system; means for decrypting the content using the key to generate a decrypted content and for sending the decrypted content to the computing engine in response to receiving the read request from a computing engine of the computing system to read content from a memory of the computing system, and in response to a determination that the no-decrypt mode is inactive; and means for sending the content to the computing engine without decrypting the content in response to receiving the read request from a computing engine of the computing system to read the content from a memory of the computing system, and in response to a determination that the no-decrypt mode is active.
Example 31 includes the subject matter of Example 30, and optionally, further including: means for receiving a first instruction including information on a first cryptographic key and a second instruction including information on a second cryptographic key; means for determining that the no-decrypt mode is to be inactive with respect to a read request from a first computing engine of the computing system to read a first content from the memory of the computing system; means for determining that the no-decrypt mode is to be inactive with respect to a read request from a second computing engine of the computing system to read a second content from the memory of the computing system; means for decrypting the first content using the first cryptographic key in response to receiving the read request from the first computing engine to generate a decrypted first content, and for sending the decrypted first content to the first computing engine, the first computing engine to process the decrypted first content to generate the second content; means for encrypting the second content using the second cryptographic key in response to receiving a write request from the first computing engine to write the second content to the memory, and for writing the encrypted second content to the memory; and means for decrypting the second content using the second cryptographic key in response to receiving the read request from the second computing engine to generate a decrypted second content, and for sending the decrypted second content to the second computing engine, the second computing engine to process the decrypted second content to generate processed second content.
Example 32 includes the subject matter of Example 31, and optionally, further including: means for receiving a third instruction including information on a third cryptographic key; means for determining that the no-decrypt mode is to be active with respect to a read request from the second computing engine to read the processed second content from the memory of the computing system; means for encrypting the processed second content, using the third cryptographic key, in response to receiving a write request from the second computing engine to write the processed second content to the memory, to generate encrypted processed second content, and writing the encrypted processed second content to the memory; and means for sending, without decrypting and in response to receiving the read request from the second computing engine to read the encrypted processed second content, the encrypted processed second content to the second computing engine.
Example 33 includes the subject matter of Example 31, and optionally, wherein the first computing engine is a graphics processing unit, and the second computing engine is a display engine.
Example 34 includes the subject matter of Example 30, and optionally, wherein the instruction further includes: information on a key identifier (KeyID) corresponding to the cryptographic key; and a no-decrypt (ND) mode field, the device further including means for decoding the instruction to determine the KeylD, and to determine, based on the ND mode field, whether the no-decrypt mode is to be active or inactive.
Example 35 includes the subject matter of Example 31, and optionally, further including: means for receiving the second instruction including the information on the second cryptographic key from the first computing engine; means for exposing, in response to receiving the second instruction, a cache memory to the first computing engine to allow the first computing engine to access the cache memory to write the information on the second cryptographic key therein; means for storing the information on the second cryptographic key in the cache memory; and means for encrypting the second content using the second cryptographic key stored in the cache memory in response to receiving the write request from the first computing engine to write the second content to the memory, and for generating the encrypted second content before writing the encrypted second content to the memory.
Example 36 includes the subject matter of Example 32, and optionally, further including: means for receiving the third instruction including the information on the third cryptographic key from the first computing engine; means for exposing, in response to receiving the third instruction, a cache memory to the first computing engine to allow the first computing engine to access the cache memory to write the information on the third cryptographic key therein; means for storing the information on the third cryptographic key in the cache memory; and encrypting the processed second content, using the third cryptographic key stored in the cache memory, in response to receiving a write request from the second computing engine to write the processed second content to the memory, to generate the encrypted processed second content before writing the encrypted processed second content to the memory.
Example 37 includes the subject matter of Example 30, and optionally, further including: means for receiving the instruction including the information on the cryptographic key from the computing engine; means for receiving an instruction including information on another cryptographic key from a central processing unit of the computing system, wherein the cryptographic key and said another cryptographic key are both associated with at least one of encryption or decryption of the content; and means for using the cryptographic key, in response to receiving a request from the computing engine to at least one of read the content from the memory or write the content to the memory, to at least one of decrypt the content or encrypt the content without using said another cryptographic key.
Example 38 includes the subject matter of Example 30, and optionally, further including means for receiving central processing unit (CPU) instructions from a CPU of the computing system, the CPU instructions including instructions to program with a capability to implement the no-decrypt mode.
Example 39 includes a device of a computing system, the device comprising one or more processors, an input/output interface connected to the one or more processors to enable communication between the one or more processors and a cryptographic engine of the computing system, the one or more processors to: send, to the cryptographic engine, an instruction including information on a cryptographic key to be used by the cryptographic engine to encrypt content; send a write request to the cryptographic engine to write the cryptographic key in a cache memory of the cryptographic engine; send a read request to the cryptographic engine for the cryptographic engine to read the content; and receive the content from the cryptographic engine in decrypted form as decrypted content, the cryptographic engine having decrypted the encrypted content to generate the decrypted content.
Example 40 includes the subject matter of Example 39, and optionally, wherein: the content is a first content; the decrypted content is a decrypted first content; the cryptographic key is a first cryptographic key; and the one or more processors are further to: decode the decrypted first content to generate a second content; and send a write request to the cryptographic engine to write the second content to the memory in encrypted form based on a second cryptographic key.
Example 41 includes the subject matter of Example 39, and optionally, wherein the instruction includes an indication to the cryptographic engine to use the cryptographic key instead of another cryptographic key to encrypt the content.
Example 42 includes the subject matter of Example 39, and optionally, wherein the device is a graphics processing unit (GPU).
Example 43 includes the subject matter of Example 39, and optionally, wherein the device is a graphics processing unit (GPU) the cryptographic engine is a multi-key total memory encryption (MKTME) engine, and the computing engine is a display device.
Example 44 includes the subject matter of Example 39, and optionally, wherein the device is a central processing unit (CPU) including a plurality of central processing unit (CPU) cores coupled to the one or more processors, and wherein the one or more processors are one or more processors of a graphics processing unit (GPU) embedded in the CPU.
Example 45 includes product comprising one or more tangible computer-readable non-transitory storage media comprising computer-executable instructions operable to, when executed by at least one computer processor, cause the at least one computer processor to implement operations at an device of a computing system, the operations comprising: sending, to a cryptographic engine of the computing system, an instruction including information on a cryptographic key to be used by the cryptographic engine to encrypt content; sending a write request to the cryptographic engine to write the cryptographic key in a cache memory of the cryptographic engine; sending a read request to the cryptographic engine for the cryptographic engine to read the content; and receiving the content from the cryptographic engine in decrypted form as decrypted content, the cryptographic engine having decrypted the encrypted content to generate the decrypted content.
Example 46 includes the subject matter of Example 45, and optionally, wherein: the content is a first content; the decrypted content is a decrypted first content; the cryptographic key is a first cryptographic key; and the operations further include: decoding the decrypted first content to generate a second content; and sending a write request to the cryptographic engine to write the second content to the memory in encrypted form based on a second cryptographic key.
Example 47 includes the subject matter of Example 45, and optionally, wherein the instruction includes an indication to the cryptographic engine to use the cryptographic key instead of another cryptographic key to encrypt the content.
Example 48 includes a method comprising: sending, to a cryptographic engine of a computing system, an instruction including information on a cryptographic key to be used by the cryptographic engine to encrypt content; sending a write request to the cryptographic engine to write the cryptographic key in a cache memory of the cryptographic engine; and sending a read request to the cryptographic engine for the cryptographic engine to read the content; and receiving the content from the cryptographic engine in decrypted form as decrypted content, the cryptographic engine having decrypted the encrypted content to generate the decrypted content.
Example 49 includes the subject matter of Example 48, and optionally, wherein: the content is a first content; the decrypted content is a decrypted first content; the cryptographic key is a first cryptographic key; and the method further includes: decoding the decrypted first content to generate a second content; and sending a write request to the cryptographic engine to write the second content to the memory in encrypted form based on a second cryptographic key.
Example 50 includes the subject matter of Example 48, and optionally, wherein the instruction includes an indication to the cryptographic engine to use the cryptographic key instead of another cryptographic key to encrypt the content.
Example 51 includes a device comprising: means for sending, to a cryptographic engine, an instruction including information on a cryptographic key to be used by the cryptographic engine to encrypt content; means for sending a write request to the cryptographic engine to write the cryptographic key in a cache memory of the cryptographic engine; means for sending a read request to the cryptographic engine for the cryptographic engine to read the content; means for receiving the content from the cryptographic engine in decrypted form as decrypted content, the cryptographic engine having decrypted the encrypted content to generate the decrypted content.
Example 52 includes the subject matter of Example 51, and optionally, wherein: the content is a first content; the decrypted content is a decrypted first content; the cryptographic key is a first cryptographic key; and the device further includes: means decoding the decrypted first content to generate a second content; and means for sending a write request to the cryptographic engine to write the second content to the memory in encrypted form based on a second cryptographic key.
Example 53 includes the subject matter of Example 51, and optionally, wherein the instruction includes an indication to the cryptographic engine to use the cryptographic key instead of another cryptographic key to encrypt the content.
Example 54 includes a device of a computing system, the device comprising one or more processors, an input/output interface connected to the one or more processors to enable communication between the one or more processors and a cryptographic engine of the computing system, the one or more processors to: send a write request to the cryptographic engine to write content to a memory of the computing system in encrypted form, based on a cryptographic key, to generate encrypted content; send a read request to the cryptographic engine to read the encrypted content; receive the encrypted content from the cryptographic engine without decryption by the cryptographic engine; and send the encrypted content to a display device for display by the device.
Example 55 includes the subject matter of Example 54, and optionally, wherein the content is a second content and the cryptographic key is a second cryptographic key, the one or more processors further to, prior to sending the write request: send a read request to the cryptographic engine to read a first content from a memory of the computing system; receive the first content from the cryptographic engine in decrypted form as a decrypted first content, the cryptographic engine having decrypted the first content to generate the decrypted first content using a first cryptographic key; and process the decrypted first content to generate the second content.
Example 56 includes the subject matter of Example 54, and optionally, wherein the encrypted content includes counter-mode High Bandwidth Digital Content Protection (HDCP) encrypted data.
Example 57 includes the subject matter of Example 54, and optionally, where the one or more processors are further to send, to the cryptographic engine, an instruction including information on a cryptographic key to be used by the cryptographic engine to generate the encrypted content.
Example 58 includes the subject matter of Example 57, and optionally, wherein the instruction includes an indication to the cryptographic engine to use the cryptographic key instead of any other cryptographic key to generate the encrypted content.
Example 59 includes the subject matter of Example 54, and optionally, wherein the device is a display engine.
Example 60 includes the subject matter of Example 54, and optionally, wherein the cryptographic engine is a multi-key total memory encryption (MKTME) engine.
Example 61 includes a product comprising one or more tangible computer-readable non-transitory storage media comprising computer-executable instructions operable to, when executed by at least one computer processor, cause the at least one computer processor to implement operations at a computing system, the operations comprising: sending a write request to a cryptographic engine to write content to a memory of the computing system in encrypted form, based on a cryptographic key, to generate encrypted content; sending a read request to the cryptographic engine to read the encrypted content; receiving the encrypted content from the cryptographic engine without decryption by the cryptographic engine; and sending the encrypted content to a display device for display by the device.
Example 62 includes the subject matter of Example 61, and optionally, wherein the content is a second content and the cryptographic key is a second cryptographic key, the operations further including, prior to sending the write request: sending a read request to the cryptographic engine to read a first content from a memory of the computing system; receiving the first content from the cryptographic engine in decrypted form as a decrypted first content, the cryptographic engine having decrypted the first content to generate the decrypted first content using a first cryptographic key; and processing the decrypted first content to generate the second content.
Example 63 includes the subject matter of Example 61, and optionally, wherein the encrypted content includes counter-mode High Bandwidth Digital Content Protection (HDCP) encrypted data.
Example 64 includes the subject matter of Example 61, and optionally, where the operations further include sending, to the cryptographic engine, an instruction including information on a cryptographic key to be used by the cryptographic engine to generate the encrypted content.
Example 65 includes the subject matter of Example 64, and optionally, wherein the instruction includes an indication to the cryptographic engine to use the cryptographic key instead of any other cryptographic key to generate the encrypted content.
Example 66 includes a method comprising: sending a write request to a cryptographic engine to write content to a memory of a computing system in encrypted form, based on a cryptographic key, to generate encrypted content; sending a read request to the cryptographic engine to read the encrypted content; receiving the encrypted content from the cryptographic engine without decryption by the cryptographic engine; and sending the encrypted content to a display device for display by the device.
Example 67 includes the subject matter of Example 66, and optionally, wherein the content is a second content and the cryptographic key is a second cryptographic key, the method further including, prior to sending the write request: sending a read request to the cryptographic engine to read a first content from a memory of the computing system; receiving the first content from the cryptographic engine in decrypted form as a decrypted first content, the cryptographic engine having decrypted the first content to generate the decrypted first content using a first cryptographic key; and processing the decrypted first content to generate the second content.
Example 68 includes the subject matter of Example 66, and optionally, wherein the encrypted content includes counter-mode High Bandwidth Digital Content Protection (HDCP) encrypted data.
Example 69 includes the subject matter of Example 66, and optionally, further including sending, to the cryptographic engine, an instruction including information on a cryptographic key to be used by the cryptographic engine to generate the encrypted content.
Example 70 includes the subject matter of Example 69, and optionally, wherein the instruction includes an indication to the cryptographic engine to use the cryptographic key instead of any other cryptographic key to generate the encrypted content.
Example 71 includes a device comprising: means for sending a write request to a cryptographic engine to write content to a memory of a computing system in encrypted form, based on a cryptographic key, to generate encrypted content; means for sending a read request to the cryptographic engine to read the encrypted content; means for receiving the encrypted content from the cryptographic engine without decryption by the cryptographic engine; and means for sending the encrypted content to a display device for display by the device.
Example 72 includes the subject matter of Example 71, and optionally, wherein the content is a second content and the cryptographic key is a second cryptographic key, the device further including: means for sending, prior to sending the write request, a read request to the cryptographic engine to read a first content from a memory of the computing system; means for receiving the first content from the cryptographic engine in decrypted form as a decrypted first content, the cryptographic engine having decrypted the first content to generate the decrypted first content using a first cryptographic key; and means for processing the decrypted first content to generate the second content.
Example 73 includes the subject matter of Example 71, and optionally, wherein the encrypted content includes counter-mode High Bandwidth Digital Content Protection (HDCP) encrypted data.
Example 74 includes the subject matter of Example 71, and optionally, further including means for sending, to the cryptographic engine, an instruction including information on a cryptographic key to be used by the cryptographic engine to generate the encrypted content.
Example 75 includes the subject matter of Example 74, and optionally, wherein the instruction includes an indication to the cryptographic engine to use the cryptographic key instead of any other cryptographic key to generate the encrypted content.

## Claims

1. An apparatus of a computing system, the apparatus comprising one or more processors, and an input/output interface connected to the one or more processors to enable communication between the one or more processors and a computing engine of the computing system, the one or more processors to:
receive an instruction including information on a cryptographic key;
determine whether a no-decrypt mode is to be active or inactive with respect to a read request from the computing engine;
in response to receiving the read request from the computing engine to read content from a memory of the computing system, and in response to a determination that the no-decrypt mode is inactive, decrypt the content using the key to generate a decrypted content and send the decrypted content to the computing engine; and
in response to receiving the read request from the computing engine of the computing system to read the content from a memory of the computing system, and in response to a determination that the no-decrypt mode is active, send the content to the computing engine without decrypting the content.

2. The apparatus of claim 1, wherein the one or more processors are further to:
receive a first instruction including information on a first cryptographic key and a second instruction including information on a second cryptographic key;
determine that the no-decrypt mode is to be inactive with respect to a read request from a first computing engine of the computing system to read a first content from the memory of the computing system;
determine that the no-decrypt mode is to be inactive with respect to a read request from a second computing engine of the computing system to read a second content from the memory of the computing system;
in response to receiving the read request from the first computing engine, decrypt the first content, using the first cryptographic key, to generate a decrypted first content, and send the decrypted first content to the first computing engine, the first computing engine to process the decrypted first content to generate the second content;
in response to receiving a write request from the first computing engine to write the second content to the memory, encrypt the second content, using the second cryptographic key, to generate an encrypted second content, and write the encrypted second content to the memory; and
in response to receiving the read request from the second computing engine, decrypt the second content, using the second cryptographic key, to generate a decrypted second content, and send the decrypted second content to the second computing engine, the second computing engine to process the decrypted second content to generate processed second content.

3. The apparatus of claim 2, wherein the one or more processors are further to:
receive a third instruction including information on a third cryptographic key;
determine that the no-decrypt mode is to be active with respect to a read request from the second computing engine to read the processed second content from the memory of the computing system;
in response to receiving a write request from the second computing engine to write the processed second content to the memory, encrypt the processed second content, using the third cryptographic key, to generate encrypted processed second content, and write the encrypted processed second content to the memory; and
in response to receiving the read request from the second computing engine to read the encrypted processed second content, send, without decrypting, the encrypted processed second content to the second computing engine.

4. The apparatus of claim 2, further including cache memory, the cache memory coupled to the one or more processors, wherein the one or more processors are to:
receive the second instruction including the information on the second cryptographic key from the first computing engine;
in response to receiving the second instruction, expose the cache memory to the first computing engine to allow the first computing engine to access the cache memory to write the information on the second cryptographic key therein;
store the information on the second cryptographic key in the cache memory; and
in response to receiving the write request from the first computing engine to write the second content to the memory, encrypt the second content, using the second cryptographic key stored in the cache memory, to generate the encrypted second content before writing the encrypted second content to the memory.

5. The apparatus of claim 1, wherein the one or more processors are to:
receive the instruction including the information on the cryptographic key from the computing engine;
receive an instruction including information on another cryptographic key from a central processing unit of the computing system, wherein the cryptographic key and said another cryptographic key are both associated with at least one of encryption or decryption of the content; and
in response to receiving a request from the computing engine to at least one of read the content from the memory or write the content to the memory, use the cryptographic key to at least one of decrypt the content or encrypt the content without using said another cryptographic key.

6. The apparatus of any one of claims 1-5, further including:
the memory, the memory including a system memory of the computing system; and
a memory controller connected to the memory and to the one or more processors.

7. A method including:
receiving an instruction including information on a cryptographic key;
determining whether a no-decrypt mode is to be active or inactive with respect to a read request from a computing engine of a computing system;
in response to receiving the read request from a computing engine of the computing system to read content from a memory of the computing system, and in response to a determination that the no-decrypt mode is inactive, decrypting the content using the key to generate a decrypted content and sending the decrypted content to the computing engine; and
in response to receiving the read request from a computing engine of the computing system to read the content from a memory of the computing system, and in response to a determination that the no-decrypt mode is active, sending the content to the computing engine without decrypting the content.

8. The method of claim 7:
receiving a first instruction including information on a first cryptographic key and a second instruction including information on a second cryptographic key;
determining that the no-decrypt mode is to be inactive with respect to a read request from a first computing engine of the computing system to read a first content from the memory of the computing system;
determining that the no-decrypt mode is to be inactive with respect to a read request from a second computing engine of the computing system to read a second content from the memory of the computing system;
in response to receiving the read request from the first computing engine, decrypting the first content, using the first cryptographic key, to generate a decrypted first content, and sending the decrypted first content to the first computing engine, the first computing engine to process the decrypted first content to generate the second content;
in response to receiving a write request from the first computing engine to write the second content to the memory, encrypting the second content, using the second cryptographic key, to generate an encrypted second content, and writing the encrypted second content to the memory; and
in response to receiving the read request from the second computing engine, decrypting the second content, using the second cryptographic key, to generate a decrypted second content, and sending the decrypted second content to the second computing engine, the second computing engine to process the decrypted second content to generate processed second content.

9. The method of claim 8, further including:
receiving a third instruction including information on a third cryptographic key;
determining that the no-decrypt mode is to be active with respect to a read request from the second computing engine to read the processed second content from the memory of the computing system;
in response to receiving a write request from the second computing engine to write the processed second content to the memory, encrypting the processed second content, using the third cryptographic key, to generate encrypted processed second content, and writing the encrypted processed second content to the memory; and
in response to receiving the read request from the second computing engine to read the encrypted processed second content, sending, without decrypting, the encrypted processed second content to the second computing engine.

10. The method of claim 7, wherein the instruction further includes:
information on a key identifier (KeyID) corresponding to the cryptographic key; and
a no-decrypt (ND) mode field, the method further including decoding the instruction to determine the KeylD, and to determine, based on the ND mode field, whether the no-decrypt mode is to be active or inactive.

11. The method of claim 8, further including:
receiving the second instruction including the information on the second cryptographic key from the first computing engine;
in response to receiving the second instruction, exposing a cache memory to the first computing engine to allow the first computing engine to access the cache memory to write the information on the second cryptographic key therein;
storing the information on the second cryptographic key in the cache memory; and
in response to receiving the write request from the first computing engine to write the second content to the memory, encrypting the second content, using the second cryptographic key stored in the cache memory, to generate the encrypted second content before writing the encrypted second content to the memory.

12. The method of claim 9, further including:
receiving the third instruction including the information on the third cryptographic key from the first computing engine;
in response to receiving the third instruction, exposing a cache memory to the first computing engine to allow the first computing engine to access the cache memory to write the information on the third cryptographic key therein;
storing the information on the third cryptographic key in the cache memory; and
in response to receiving a write request from the second computing engine to write the processed second content to the memory, encrypting the processed second content, using the third cryptographic key stored in the cache memory, to generate the encrypted processed second content before writing the encrypted processed second content to the memory.

13. The method of claim 7, further including:
receiving the instruction including the information on the cryptographic key from the computing engine;
receiving an instruction including information on another cryptographic key from a central processing unit of the computing system, wherein the cryptographic key and said another cryptographic key are both associated with at least one of encryption or decryption of the content; and
in response to receiving a request from the computing engine to at least one of read the content from the memory or write the content to the memory, using the cryptographic key to at least one of decrypt the content or encrypt the content without using said another cryptographic key.

14. The method of claim 7, the method including receiving central processing unit (CPU) instructions from a CPU of the computing system, the CPU instructions including instructions to program with a capability to implement the no-decrypt mode.

15. A machine readable medium including code which, when executed, is to cause a machine to perform the method of any one of claims 7-14.
